# EUROPEAN PATENT APPLICATION

(11) **EP 4 636 608 A1**
(43) Date of publication of application: **22.10.2025**
(21) Application number: 23903135.4
(22) Date of filing: 30.10.2023
(51) Int. Cl.: G06F 16/23

(54) **DEVICE AND METHOD FOR GENERATING STRUCTURED DATA RELATING TO DOCUMENTS REPRESENTING PLURAL PROCEDURES**

(30) Priority: 15.12.2022 JP 2022200233
(71) Applicant: Hitachi, Ltd., Tokyo 100-8280 (JP)
(72) Inventor: AIKOH, Kazuhide, Tokyo 100-8280 (JP)
(74) Representative: MERH-IP Matias Erny Reichl Hoffmann Patentanwälte PartG mbB
(86) International application number: PCT/JP2023/039145
(87) International publication number: WO 2024/127837

(57) **Abstract**

A data processing apparatus performs structuring update processing that is processing of generating updated structured data with respect to structured data on a document describing a plurality of procedures. The structured data is graph data representing a graph including a plurality of entity nodes and one or more edges. Each of the plurality of entity nodes is a node expressing an entity in the document. The structuring update processing includes updating a structured graph that is a graph represented by the structured data or a duplicate thereof, based on update definition data and a taxonomy of at least one entity node in the structured graph, the update definition data being data defining update of at least one of a node and an edge in an expression using the taxonomy. The updated structured data is data representing a graph after the structured graph is updated.

## Description

### Technical Field

The present invention generally relates to generation of structured data for documents describing a plurality of procedures.

### Background Art

In recent years, there has been a growing need in various fields to use AI to support, streamline, and optimize business processes each including a plurality of procedures. For example, AI for recommending device operating procedures and recommending a process against a failure of a device has been put into practical use in the industrial field, AI for offering assistance in taking diagnosis, treatment, and medication actions has been put into practical use in the medical field, and AI for recommending a new material synthesis process has been put into practical use in the materials field.

In order to realize support of business processes using AI or the like, it is generally necessary to prepare data capable of processing the business processes. However, since business process-related information is often accumulated as documents described in natural languages (equipment maintenance reports, medical charts, experimental reports, etc.), making it difficult to perform information processing on the business process-related information as it is. Therefore, it is necessary to convert the information described in the documents into structured data capable of performing information processing.

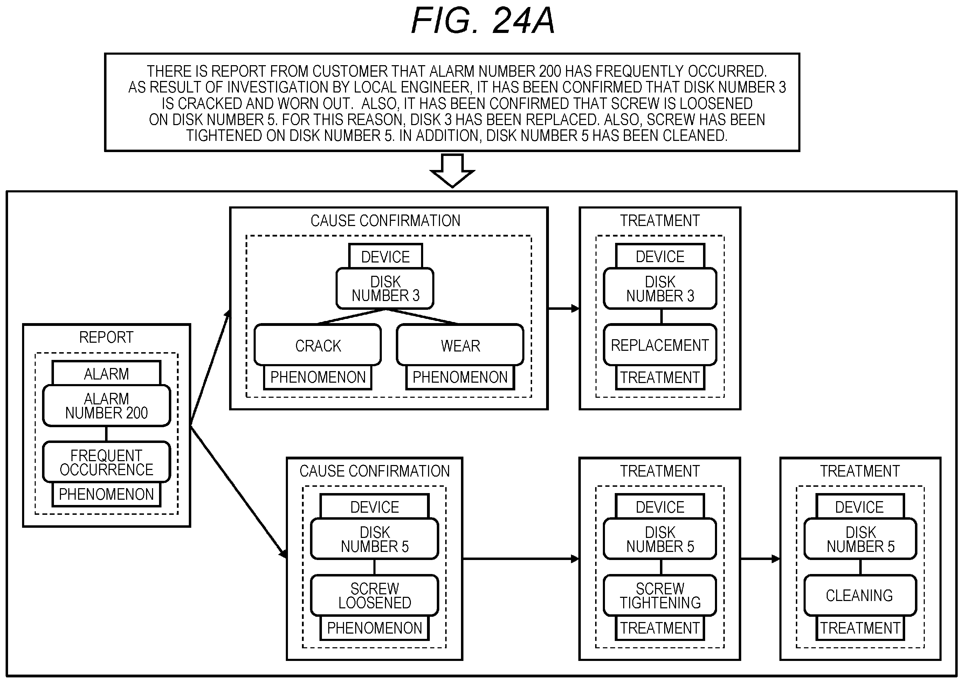

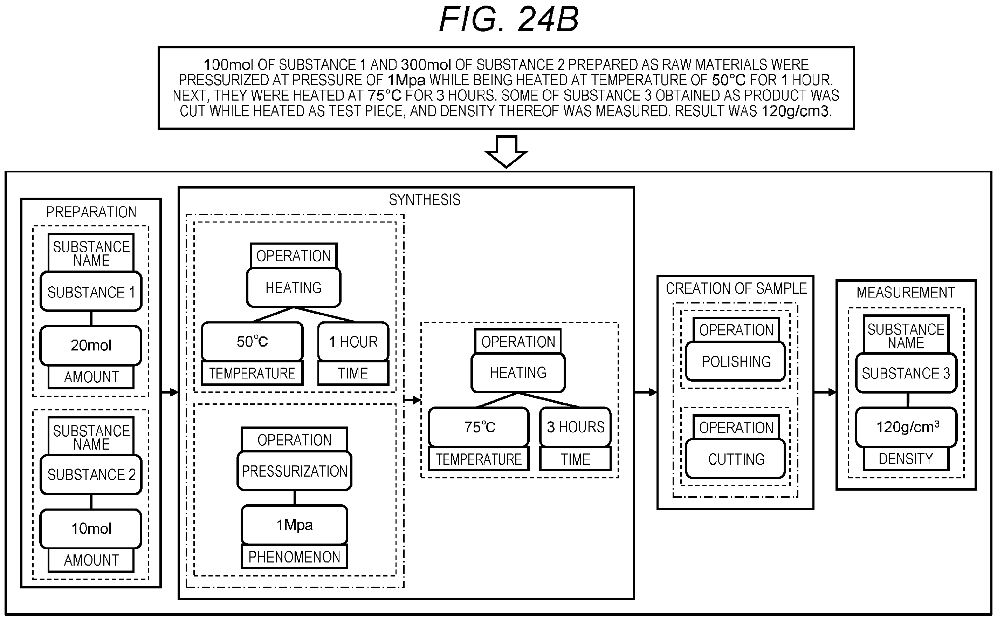

FIGS. 24A and 24B are diagrams illustrating images in which business processes are structured. FIG. 24A illustrates an image in which a business process related to maintenance, and is structured, and FIG. 24B illustrates an image in which a business process related to substance production is structured.

To manually generate structured data from documents, a huge amount of time and expertise are required. Therefore, there is a demand for a technology for automatically generating structured data from documents. In this regard, the techniques described in PTL 1 and NPL 1 are known.

PTL 1 describes a document understanding support device a document understanding support apparatus "including a word extraction condition learning unit, a word extraction unit, a word relationship extraction condition learning unit, a word relationship extraction unit, and an output unit". In addition, PTL 1 describes that "the word extraction condition learning unit generates a word extraction condition for extracting words from an electronic document for support by learning based on features assigned to the respective words", "the word extraction unit extracts words satisfying the word extraction condition", "the word relationship extraction condition learning device generates a phrase relationship extraction condition for extracting word relationships from an electronic document for support by learning based on features for extraction target word relationships", and "the word relationship extraction unit extracts a word relationship satisfying the word relationship extraction condition".

NPL 1 describes a method of state transition and information complementation in structured cooking recipes by recognizing an order using a rule characterized by dependencies between ingredients and operations, procedure numbers, etc.

### Citation List

### Patent Literature

PTL 1: JP 2019-79321 A

### Non Patent Literature

NPL 1: Cooking Scenario - Turning Recipes into Scenarios and Applications Thereof, Information Processing Society of Japan Research Report Database System (DBS), 2003 (71 (2003-DBS-131)), pp. 25-31

### Summary of Invention

### Technical Problem

In the technique of PTL 1, a large amount of training data is required to ensure accuracy. Therefore, it is difficult to apply the technique of PTL 1 in a field where training data is small.

In the technique of NPL 1, rules are described based on Japanese grammar, and it is necessary to make rules for each language. Furthermore, when consecutive procedures are described in a document in a discrete manner (for example, when a plurality of processes are described across multiple sentences), it is difficult to formulate rules.

Structured data generated for a document can be used for a given or desired purpose. For example, the structured data can be used as data for training a machine learning model. Poor accuracy of structured data (e.g., information missing due to omissions in documents) may make it difficult to achieve a given or desired purpose.

However, in the techniques disclosed in PTL 1 and NPL 1, it is difficult to generate highly accurate structured data on documents for the reasons described above.

The present invention has been made in view of the above-described problems, and an object thereof is to generate highly accurate structured data on a document describing a plurality of procedures.

### Solution to Problem

A representative example of the invention disclosed in the present application is as follows. That is, a data processing apparatus performs structuring update processing that is processing of generating updated structured data with respect to structured data on a document describing a plurality of procedures. The structured data is graph data representing a graph including a plurality of entity nodes and one or more edges. Each of the plurality of entity nodes is a node expressing an entity in the document. The structuring update processing includes updating a structured graph that is a graph represented by the structured data or a duplicate thereof, based on update definition data and a taxonomy of at least one entity node in the structured graph, the update definition data being data defining update of at least one of a node and an edge in an expression using the taxonomy. The updated structured data is data representing a graph after the structured graph is updated.

### Advantageous Effects of Invention

According to the present invention, it is possible to generate highly accurate structured data on a document describing a plurality of procedures. Other problems, configurations, and effects that are not described above will be apparent from the following description of embodiments.

### Brief Description of Drawings

[FIG. 1] FIG. 1 is a diagram illustrating an example of a system according to a first embodiment.
[FIG. 2] FIG. 2 is a diagram illustrating an example of a hardware configuration of a computer according to the first embodiment.
[FIG. 3] FIG. 3 is a diagram illustrating an example of a document database according to the first embodiment.
[FIG. 4] FIG. 4 is a diagram illustrating an example of an entity/category dictionary stored in a structuring rule database according to the first embodiment.
[FIG. 5] FIG. 5 is a diagram illustrating an example of procedure category determination rule information stored in the structuring rule database according to the first embodiment.
[FIG. 6] FIG. 6 is a diagram illustrating an example of main entity determination rule information stored in the structuring rule database according to the first embodiment.
[FIG. 7] FIG. 7 is a diagram illustrating an example of parallelism determination rule information stored in the structuring rule database according to the first embodiment.
[FIG. 8] FIG. 8 is a diagram illustrating an example of business process order determination rule information stored in the structuring rule database according to the first embodiment.
[FIG. 9] FIG. 9 is a diagram illustrating an example of procedure order determination rule information stored in the structuring rule database according to the first embodiment.
[FIG. 10] FIG. 10 is a diagram illustrating an example of relationship definition information stored in the structuring rule database according to the first embodiment according to the first embodiment.
[FIG. 11] FIG. 11 is a flowchart illustrating an outline of structured data generation processing executed by a structuring processing apparatus according to the first embodiment.
[FIG. 12] FIG. 12 is a diagram illustrating an example of information generated by the structuring processing apparatus according to the first embodiment.
[FIG. 13] FIG. 13 is a diagram illustrating an example of information generated by the structuring processing apparatus according to the first embodiment.
[FIG. 14] FIG. 14 is a diagram illustrating an example of information generated by the structuring processing apparatus according to the first embodiment.
[FIG. 15] FIG. 15 is a diagram illustrating an example of information generated by the structuring processing apparatus according to the first embodiment.
[FIG. 16] FIG. 16 is a diagram illustrating an example of information generated by the structuring processing apparatus according to the first embodiment.
[FIG. 17] FIG. 17 is a diagram illustrating an example of information generated by the structuring processing apparatus according to the first embodiment.
[FIG. 18] FIG. 18 is a diagram illustrating an example of structured data generated by the structuring processing apparatus according to the first embodiment.
[FIG. 19A] FIG. 19A is a diagram illustrating an example of structured data displayed on a user terminal according to the first embodiment.
[FIG. 19B] FIG. 19B is a diagram illustrating an example of structured data displayed on a user terminal according to the first embodiment.
[FIG. 20] FIG. 20 is a flowchart illustrating an example of procedure category determination processing executed by the structuring processing apparatus according to the first embodiment.
[FIG. 21] FIG. 21 is a flowchart illustrating an example of main entity determination processing executed by the structuring processing apparatus according to the first embodiment.
[FIG. 22] FIG. 22 is a flowchart illustrating an example of parallelism determination processing executed by the structuring processing apparatus according to the first embodiment.
[FIG. 23] FIG. 23 is a flowchart illustrating an example of procedure order determination processing executed by the structuring processing apparatus according to the first embodiment.
[FIG. 24A] FIG. 24A is a diagram illustrating an image in which a business process is structured.
[FIG. 24B] FIG. 24B is a diagram illustrating an image in which a business process is structured.
[FIG. 25] FIG. 25 is a diagram illustrating an example of an overall flow according to a second embodiment.
[FIG. 26] FIG. 26 is a diagram illustrating an example of taxonomy data according to the second embodiment.
[FIG. 27] FIG. 27 is a diagram illustrating an example of an integrated graph indicated by integrated graph data according to the second embodiment.
[FIG. 28] FIG. 28 is a diagram illustrating an example of processing list data according to the second embodiment.
[FIG. 29] FIG. 29 is a diagram illustrating an example of a generalized graph indicated by generalized graph data according to the second embodiment.
[FIG. 30] FIG. 30 is a diagram illustrating an example of a graph pattern indicated by a graph pattern database according to the second embodiment.
[FIG. 31] FIG. 31 is a flowchart illustrating an example of graph integration processing executed by a structuring processing apparatus according to the second embodiment.
[FIG. 32] FIG. 32 is a flowchart illustrating an example of graph generalization processing executed by the structuring processing apparatus according to the second embodiment.
[FIG. 33] FIG. 33 is a flowchart illustrating an example of graph update processing executed by the structuring processing apparatus according to the second embodiment.
[FIG. 34A] FIG. 34A is a diagram illustrating an example of a split pattern according to the second embodiment.
[FIG. 34B] FIG. 34B is a diagram illustrating an example of a duplication pattern 1 according to the second embodiment.
[FIG. 34C] FIG. 34C is a diagram illustrating an example of a duplication pattern 2 according to the second embodiment.
[FIG. 34D] FIG. 34D is a diagram illustrating an example of an addition pattern 1 according to the second embodiment.
[FIG. 34E] FIG. 34E is a diagram illustrating an example of an addition pattern 2 according to the second embodiment.
[FIG. 34F] FIG. 34F is a diagram illustrating an example of an integration pattern 1 according to the second embodiment.
[FIG. 34G] FIG. 34G is a diagram illustrating an example of an integration pattern 2 according to the second embodiment.
[FIG. 34H] FIG. 34H is a diagram illustrating an example of a link replacement pattern according to the second embodiment.
[FIG. 35] FIG. 35 is a diagram illustrating an example of an overall flow according to a third embodiment.
[FIG. 36] FIG. 36 is a diagram illustrating an example of a master-slave relationship table according to the third embodiment.
[FIG. 37] FIG. 37 is a diagram illustrating an example of replacement structured data according to the third embodiment.
[FIG. 38] FIG. 38 is a flowchart illustrating an example of graph generalization processing executed by a structuring processing apparatus according to the third embodiment.
[FIG. 39] FIG. 39 is a diagram illustrating a specific example of graph generalization processing executed by the structuring processing apparatus according to the third embodiment.
[FIG. 40] FIG. 40 is a diagram illustrating an example of an overall flow according to a fourth embodiment.
[FIG. 41] FIG. 41 is a diagram illustrating an example of a name matching relationship table according to the fourth embodiment.
[FIG. 42] FIG. 42 is a diagram illustrating an example of name matching taxonomy data according to the fourth embodiment.
[FIG. 43] FIG. 43 is a flowchart illustrating an example of graph generalization processing executed by a structuring processing apparatus according to the fourth embodiment.
[FIG. 44] FIG. 44 is a diagram illustrating a specific example of graph generalization processing executed by the structuring processing apparatus according to the fourth embodiment.

### Description of Embodiments

Hereinafter, embodiments will be described with reference to the drawings. Hereinafter, embodiments of the present invention will be described with reference to the drawings. The following description and drawings are examples for describing the present invention, and some omissions and simplifications have been made as appropriate for clarity of explanation. The present invention can be implemented in various other forms. Unless otherwise specified, each component may be singular or plural.

In the following description, the same or similar configurations are denoted by the same reference numerals, and redundant description may be omitted. In the following description, the letter "S" added before a reference numeral refers to a processing step. In addition, in the following description, various types of information may be described using expressions "table", "information", and the like, but the various types of information may be expressed using a data structure other than such expressions.

Furthermore, in the following description, it will be described that information regarding a material synthesis process described in an experimental report is structured as an example, but the structuring can be applied to various fields, objects, and use cases described in the background art.

### [First Embodiment]

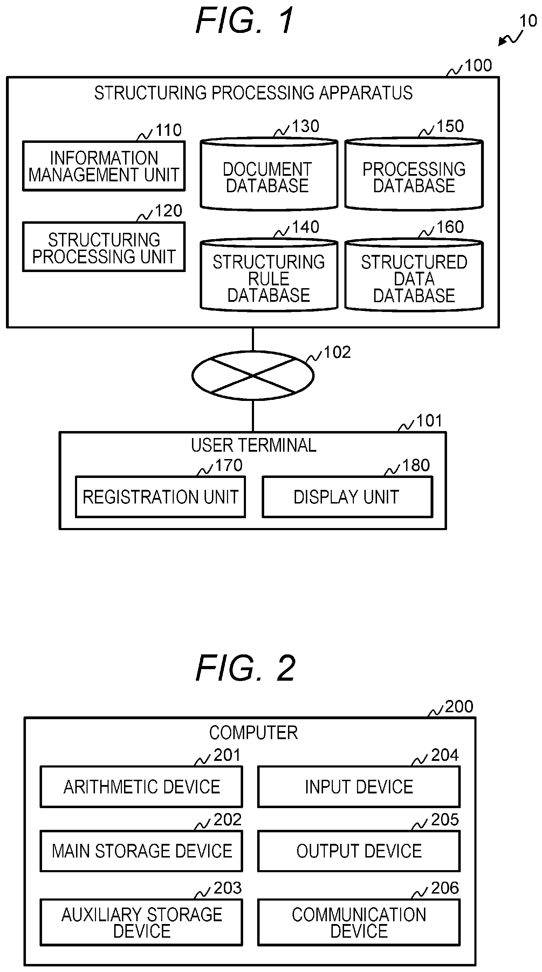

FIG. 1 is a diagram illustrating an example of a system according to a first embodiment. FIG. 2 is a diagram illustrating an example of a hardware configuration of a computer 200 according to the first embodiment.

The system 10 illustrated in FIG. 1 includes a structuring processing apparatus 100 and a user terminal 101. The structuring processing apparatus 100 and the user terminal 101 are connected to each other via a communication network 102 in a bidirectionally communicable state. The communication network 102 is, for example, a local area network (LAN), a wide area network (WAN), the Internet, a public communication network, a dedicated line, or the like. Note that the number of user terminals 101 may be two or more. In the following description, the system 10 will also be referred to as the structuring system 10.

The structuring processing apparatus 100 and the user terminal 101 are constituted by, for example, the computer 200 as illustrated in FIG. 2. The computer 200 includes an arithmetic device 201, a main storage device 202, an auxiliary storage device 203, an input device 204, an output device 205, and a communication device 206.

The arithmetic device 201 executes a program stored in the main storage device 202. The arithmetic device 201 is, for example, a central processing unit (CPU), a micro processing unit (MPU), a graphics processing unit (GPU), a field programmable gate array (FPGA), an application specific integrated circuit (ASIC), an artificial intelligence (AI) chip, or the like. The arithmetic device 201 operates as a functional unit (module) that realizes a specific function by executing processing according to the program. In the following description, when processing is described using a functional unit as a subject, this indicates that the arithmetic device 201 executes a program for realizing the functional unit.

The main storage device 202 stores programs and data executed by the arithmetic device 201. The main storage device 202 is, for example, a non-volatile memory such as a read only memory (ROM), a random access memory (RAM), and a non-volatile RAM (NVRAM). Note that the main storage device 202 is also used as a work area.

The auxiliary storage device 203 permanently stores data. The auxiliary storage device 203 is, for example, a solid state drive (SSD), a hard disk drive, or the like. Note that the computer 200 does not need to include the auxiliary storage device 203. In this case, the programs and data may be acquired from an optical storage device such as a compact disc (CD) or a digital versatile disc (DVD), an IC card, an SD card, or the like, or may be acquired from an externally connected storage system and a storage area on a cloud system. The programs and data stored in the auxiliary storage device 203 are read by the arithmetic device 201 and loaded into the main storage device 202.

The input device 204 is an interface that receives an input from the outside. The input device 204 is, for example, a keyboard, a mouse, a touch panel, a card reader, a pen input type tablet, a voice input device, or the like.

The output device 205 is an interface that outputs various types of information such as a processing progress and a processing result. The output device 205 is, for example, a display device such as a liquid crystal monitor or a liquid crystal display (LCD), an audio output device, a printer, or the like.

Note that the computer 200 does not need to include the input device 204 and the output device 205. In this case, the computer 200 inputs and outputs information via the communication device 206.

The communication device 206 communicates with other devices. The communication device 206 is, for example, a network interface card (NIC), a wireless communication module, a USB module, or the like.

The structuring processing apparatus 100 generates structured data from document data including text in which a business process is described in a natural language.

Here, it is assumed that the business process includes a plurality of procedures. The structured data is data for grasping the structure of a plurality of procedures, and examples of the structured data include Json format data, XML format data, RDF format data, and GraphML format data. The present invention is not limited to a data format of structured data. The structured data according to the first embodiment is GraphML format data.

Hereinafter, one or more sentences or a group of one or more sentences in which a business process is described will be described as a document. Furthermore, in the following description, it is assumed that processing is executed in units of documents, but the unit of processing is not necessarily limited.

The structuring processing apparatus 100 includes an information management unit 110 and a structuring processing unit 120, and also holds a document database 130, a structuring rule database 140, a processing database 150, and a structured data database 160.

The document database 130 is a database that stores documents to be processed. The structuring rule database 140 is a database that stores rules to be used in structuring processing. The processing database 150 is a database that stores processing results of the structuring processing. The structured data database 160 is a database that stores structured data generated by the structuring processing.

The information management unit 110 manages documents, rules, structured data, and the like. The structuring processing unit 120 executes structuring processing. Note that the information management unit 110 and the structuring processing unit 120 may be realized as one function of middleware or the like that manages an operating system, a file system, a relational database, and NoSQL such as keyvalue store (KVS).

The structuring processing unit 120 executes the following processing in the structuring processing.
(1) The structuring processing unit 120 extracts expressions such as words related to procedures of a business process as entities from text included in a document, and classifies categories (entity categories) of the extracted entities.
(2) The structuring processing unit 120 generates an entity group by grouping together entities related to one procedure.
(3) The structuring processing unit 120 classifies a category (procedure category) of the procedure corresponding to the entity group based on the entity categories of the entities included in the entity group.
(4)The structuring processing unit 120 specifies an entity (main entity) representing a characteristic of the procedure corresponding to the entity group among the entities included in the entity group.
(5) The structuring processing unit 120 determines procedures performed in parallel among the procedures included in the business process based on a relationship between the main entities.
(6) The structuring processing unit 120 determines a procedure order based on the relationship between the main entities and a relationship between the procedure order and the procedure categories.
(7) The structuring processing unit 120 confirms consistency between determination results of (5) and (6) and records a confirmation result.
(8) The structuring processing unit 120 generates structured data based on the determination results of (5) and (6) and the consistency confirmation result.
(9) The structuring processing unit 120 generates display information for displaying the structured data and transmits the display information to the user terminal 101.

The user terminal 101 includes a registration unit 170 that displays a screen for registering a document, various rules, and the like, and a display unit 180 that displays a screen for presenting and correcting the structured data, and the like.

Note that the functions of the structuring processing apparatus 100 may be realized using a computer system including a plurality of computers 200. In addition, all or some of the functions of the structuring processing apparatus 100 may be realized using a virtualization technology. For example, it may be considered to realize all or some of the functions of the structuring processing apparatus 100 using a cloud service such as software as a service (SaaS), platform as a service (PaaS), or infrastructure as a service (IaaS) is considered.

Note that the structuring processing apparatus 100 and the user terminal 101 may be integrated into one device.

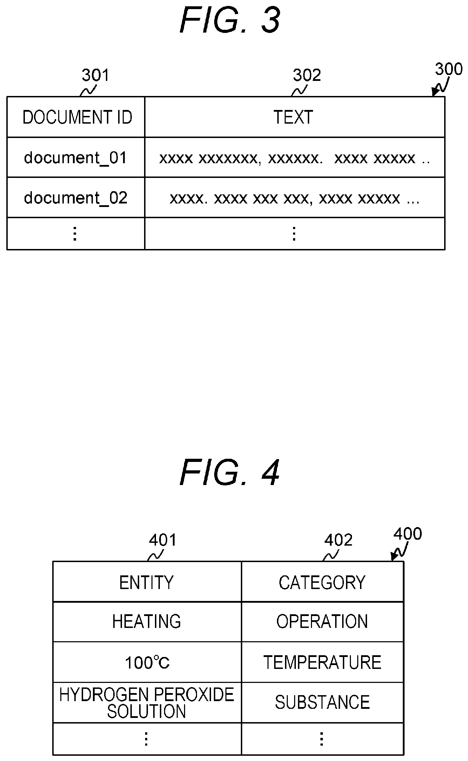

FIG. 3 is a diagram illustrating an example of the document database 130 according to the first embodiment.

The document database 130 stores entries each including a document ID 301 and text 302. One entry exists for one document. Note that the fields included in the entry are merely examples, and the present invention is not limited thereto.

The document ID 301 is a field for storing information for identifying a document. The text 302 is a field for storing text included in the document. Note that the data format of the text stored in the text 302 is not limited.

FIG. 4 is a diagram illustrating an example of an entity/category dictionary 400 stored in the structuring rule database 140 according to the first embodiment.

The entity/category dictionary 400 is information for managing expressions such as words to be extracted as entities and categories (types) of the entities. The entity/category dictionary 400 stores entries each including an entity 401 and a category 402. One entry exists for one expression (entity). Note that the fields included in the entry are merely examples, and the present invention is not limited thereto.

The entity 401 is a field for storing an expression to be extracted. The category 402 is a field for storing an entity category of the expression.

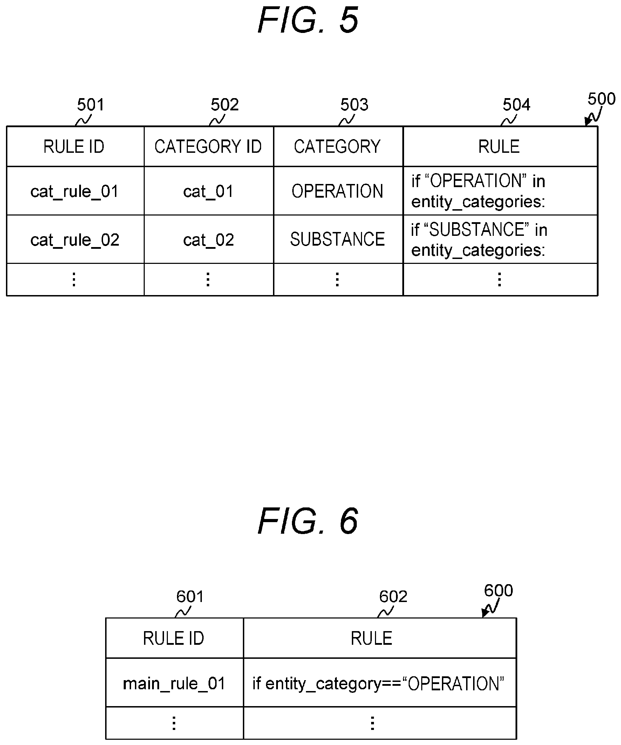

FIG. 5 is a diagram illustrating an example of procedure category determination rule information 500 stored in the structuring rule database 140 according to the first embodiment.

The procedure category determination rule information 500 is information for managing rules for determining procedure categories of procedures corresponding to entity groups. The procedure category determination rule information 500 stores entries each including a rule ID 501, a category ID 502, a category 503, and a rule 504. One entry exists for one rule. Note that the fields included in the entry are merely examples, and the present invention is not limited thereto.

The rule ID 501 is a field for storing information for identifying a rule. The category ID 502 is a field for storing information for identifying a procedure category of a procedure that matches the rule. The category 503 is a field for storing the procedure category of the procedure that matches the rule. The rule 504 is a field for storing a rule for determining the procedure category.

Here, the procedure category is a procedure type. Procedure categories such as "preparation", "operation", and "measurement" may be considered in a business process related to substance production, and procedure categories such as "report", "cause confirmation", and "treatment" may be considered in a business process related to maintenance.

As the rule for determining the procedure category, a rule using the entity category of the entity included in an entity group may be considered. For example, there is a rule for determining a procedure category of an entity group including an entity of which the entity category is "substance" as "substance". In addition, a rule for determining a procedure category based on a combination of categories of entities included in the entity group may also be considered. For example, in a business process related to maintenance of FIG. 24A, there is a rule for determining a procedure category of an entity group including entities of which the entity categories are "alarm" and "phenomenon" as "report". Note that the above-described rule is an example, and the present invention is not limited thereto.

In the first entry of FIG. 5, a rule is defined for determining that the procedure category is "operation" when "operation" is included in a variable "entity_categories" indicating an entity category of each entry included in an entity group. In the second entry of FIG. 5, a rule is defined for determining that the procedure category is "substance" when "substance" is included in a variable "entity_categories".

FIG. 6 is a diagram illustrating an example of main entity determination rule information 600 stored in the structuring rule database 140 according to the first embodiment.

The main entity determination rule information 600 is information for managing rules (main entity determination rules) each for specifying a main entity from among the entities included the entity group. The main entity determination rule information 600 stores entries each including a rule ID 601 and a rule 602. One entry exists for one rule. Note that the fields included in the entry are merely examples, and the present invention is not limited thereto.

The rule ID 601 is a field for storing information for identifying a rule. The rule 602 is a field for storing a main entity determination rule.

As the main entity determination rule, a rule using an entity category may be considered. For example, there is a rule for specifying an entity of which the entity category is "substance" as a main entity. Note that the above-described rule is an example, and the present invention is not limited thereto.

In the first entry of FIG. 6, a rule is defined for specifying an entity of which the variable "entity_category" indicating an entity category is "operation" as a main entity.

Note that the structuring rule database 140 may include information for managing rules each for specifying a subentity having a complementary relationship with the main entity.

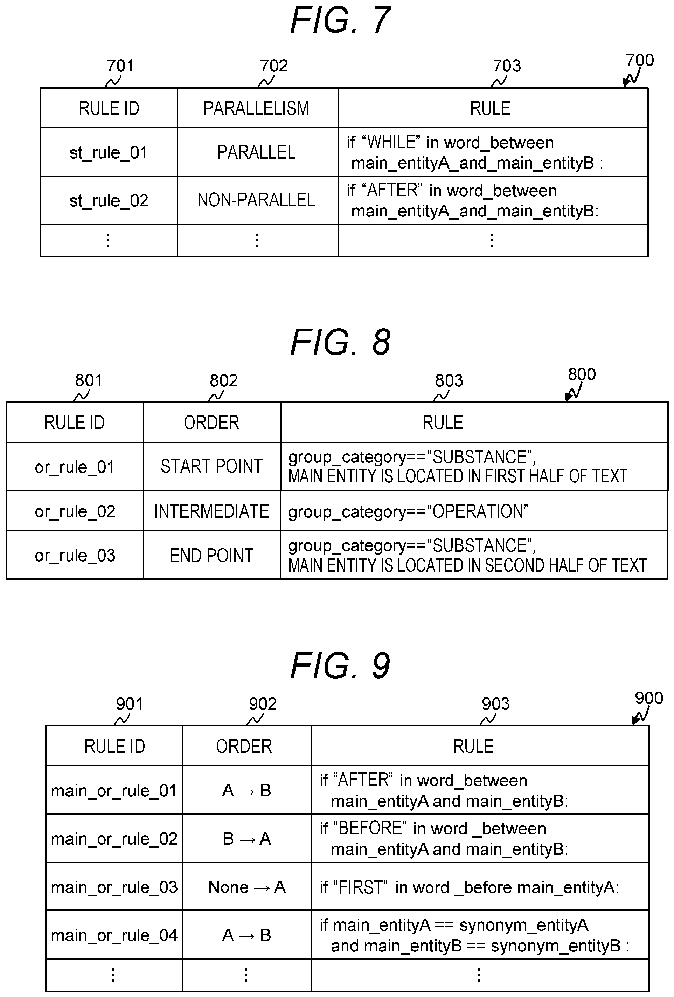

FIG. 7 is a diagram illustrating an example of parallelism determination rule information 700 stored in the structuring rule database 140 according to the first embodiment.

The parallelism determination rule information 700 is information for managing rules (parallelism determination rules) each for determining whether two procedures are performed in parallel. The parallelism determination rule information 700 stores entries each including a rule ID 701, parallelism 702, and a rule 703. One entry exists for one rule. Note that the fields included in the entry are merely examples, and the present invention is not limited thereto.

The rule ID 701 is a field for storing information for identifying a rule. The parallelism 702 is a field for storing a value indicating whether two procedures are performed in parallel. The rule 703 is a field for storing a parallelism determination rule.

As the parallelism determination rule, a rule using a word included in a sentence connecting main entities of two entity groups may be considered. Note that the above-described rule is an example, and the present invention is not limited thereto.

In the first entry of FIG. 7, a rule is defined for determining that a procedure corresponding to an entity group including main entity A and a procedure corresponding to an entity group including main entity B are performed in parallel when "however" is included in a variable "word_between main_entityA_and_main_entityB" representing a word included in a sentence connecting the main entity A and the main entity B. In the second entry of FIG. 7, a rule is defined for determining that the procedure corresponding to the entity group including main entity A and the procedure corresponding to the entity group including main entity B are not performed in parallel when "after" is included in the variable "word _between main_entityA_and_main_entityB".

FIG. 8 is a diagram illustrating an example of business process order determination rule information 800 stored in the structuring rule database 140 according to the first embodiment.

The business process order determination rule information 800 is information for managing rules (business process order determination rules) each for determining an order of each procedure based on the procedure categories. The business process order determination rule information 800 stores entries each including a rule ID 801, an order 802, and a rule 803. One entry exists for one rule. Note that the fields included in the entry are merely examples, and the present invention is not limited thereto.

The rule ID 801 is a field for storing information for identifying a rule. The order 802 is a field for storing information indicating a rough order of a procedure. "Start point" indicates a start procedure of the entire business process, "intermediate" indicates an intermediate procedure of the entire business process, and "end point" indicates an end procedure of the entire business process. The rule 803 is a field for storing a business process order determination rule.

As the business process order determination rule, a rule using only a procedure category may be considered. Note that the method of defining the procedure pattern described above is an example, and the present invention is not limited thereto. For example, a rule using a procedure category and a location of a main entity may be used.

In a certain business process, it may be common to generate structured data in which procedures are arranged in a predetermined order. For example, in a business process related to maintenance illustrated in FIG. 24A, procedures are generally arranged in the order of "report", "cause confirmation", and "treatment". Therefore, the order between procedures in the structured data is defined in advance.

In the first entry of FIG. 8, a rule is defined for determining that the procedure is a first procedure of the entire business process when the procedure category is "substance" and the main entity is within the first half of the text. In the second entry of FIG. 8, a rule is defined for determining that the procedure is an intermediate procedure of the entire business process when the procedure category is "operation". In the third entry of FIG. 8, a rule is defined for determining that the procedure is a second half procedure of the entire business process when the procedure category is "substance" and the main entity is in the second half of the text.

FIG. 9 is a diagram illustrating an example of procedure order determination rule information 900 stored in the structuring rule database 140 according to the first embodiment.

The procedure order determination rule information 900 is information for managing rules (procedure order determination rules) each for determining an order between two procedures based on a relationship between main entities. The procedure order determination rule information 900 stores entries each including a rule ID 901, an order 902, and a rule 903. One entry exists for one rule. Note that the fields included in the entry are merely examples, and the present invention is not limited thereto.

The rule ID 901 is a field for storing information for identifying a rule. The order 902 is a field for storing an order relation between entities. The rule 903 is a field for storing a procedure order determination rule.

As the procedure order determination rule, a rule using a word included in a sentence connecting main entities may be considered. Furthermore, the rule may be based on entities having a synonymous relationship. For example, in a case where "disk number 3" and "disk 3" have a synonymous relationship, a rule for arranging an entity group including "disk number 3" and an entity group including "disk 3" in the order of appearance may be considered. Note that, in addition to the synonymous relationship, the rule may use a relationship in terms of a device configuration state (within the same module of the device), a relevance relationship in terms of a substance, or the like. Note that the above-described rule is an example, and the present invention is not limited thereto.

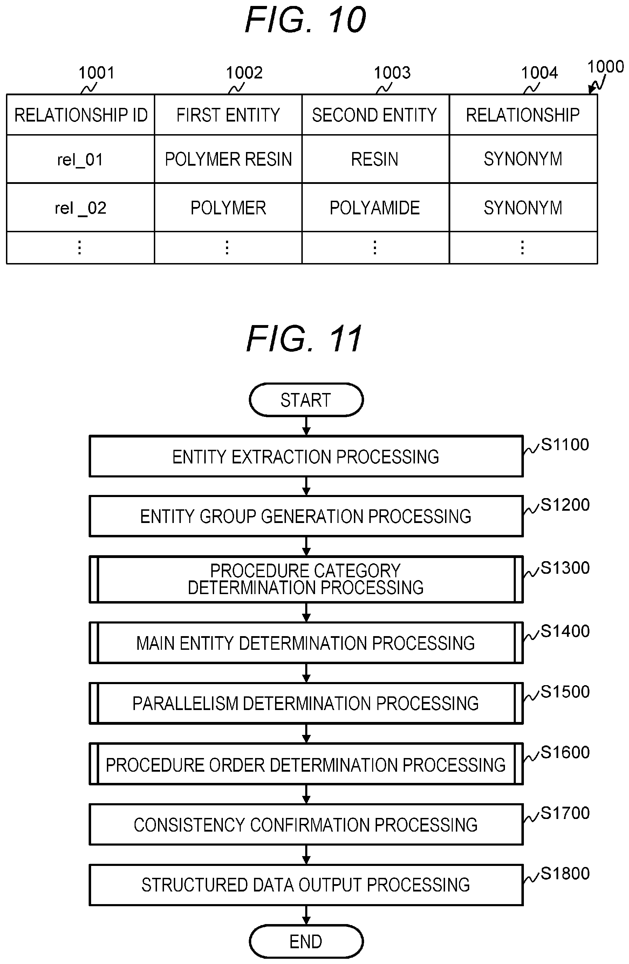

In the first entry of FIG. 9, a rule is defined for arranging an entity group including main entity A before an entity group including main entity B when "after" is included in a variable "word_between main_entityA_and_main_entityB" representing a word included in a sentence connecting the main entity A and the main entity B. In the second entry of FIG. 9, a rule is defined for arranging the entity group including the main entity B before the entity group including the main entity A when "before" is included in the variable "word_between main_entityA_and_main_entityB". In the third entry of FIG. 9, a rule is defined for arranging the entity group including the main entity A at the beginning of the business process when "first" is included in a variable "main_before main_entityA" representing a word immediately before the main entity A. In the fourth entry of FIG. 9, a rule is defined for arranging the entity group including the main entity A before the entity group including the main entity B when a term indicating a specific relationship is included in a variable "main_entityA" representing the main entity and a variable "main_entityB" representing the main entity B. The specific relationship is defined in relationship definition information 1000 (see FIG. 10) to be described later.

FIG. 10 is a diagram illustrating an example of the relationship definition information 1000 stored in the structuring rule database 140 according to the first embodiment according to the first embodiment.

The relationship definition information 1000 is information for managing specific relationships (e.g., a similarity relationship) between entities. The relationship definition information 1000 stores entries each including a relationship ID 1001, a first entity 1002, a second entity 1003, and a relationship 1004. One entry exists for one relationship between entities. Note that the fields included in the entry are merely examples, and the present invention is not limited thereto.

The relationship ID 1001 is a field for storing information for identifying a relationship. The first entity 1002 and the second entity 1003 are fields for storing entities. The relationship 1004 is a field for storing a relationship between the first entity and the second entity.

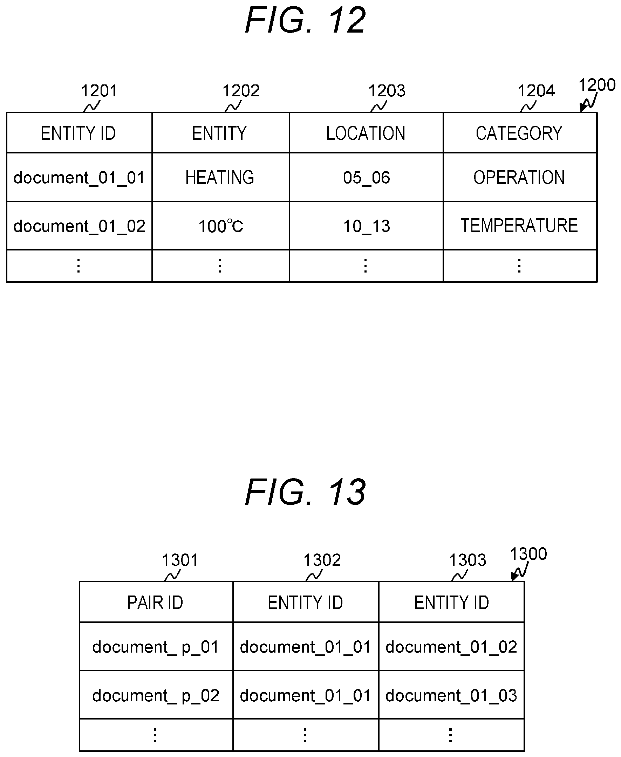

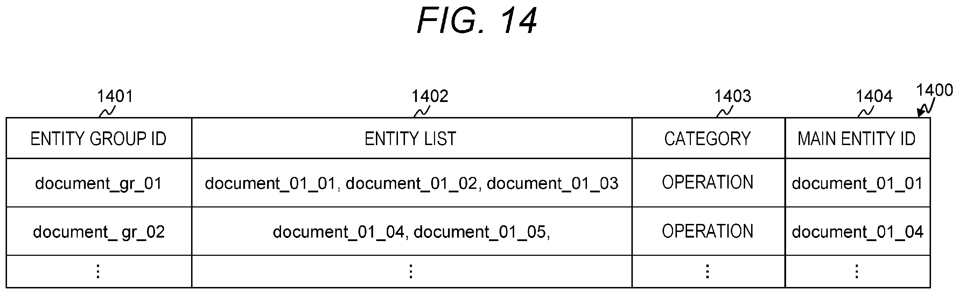

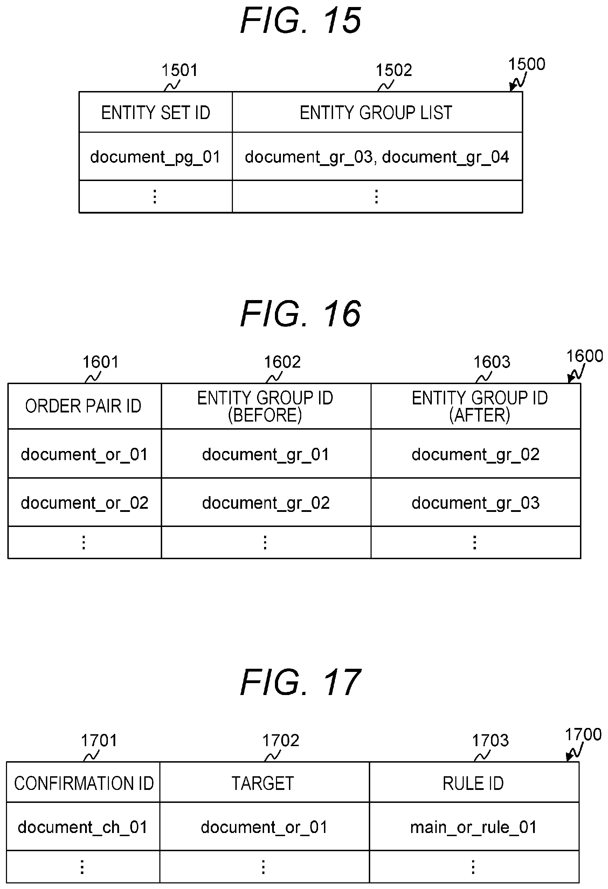

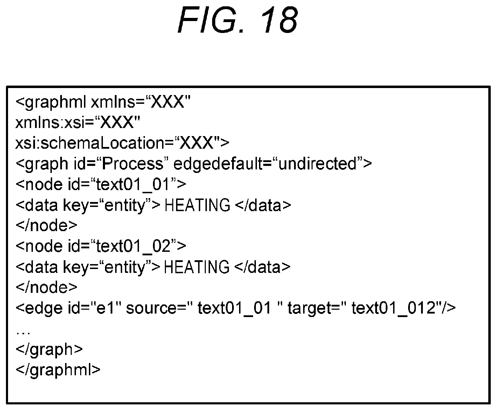

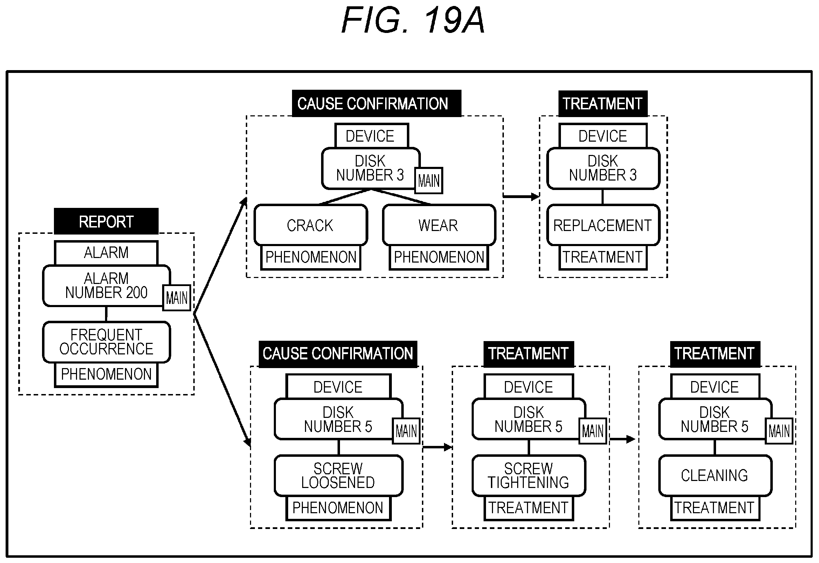

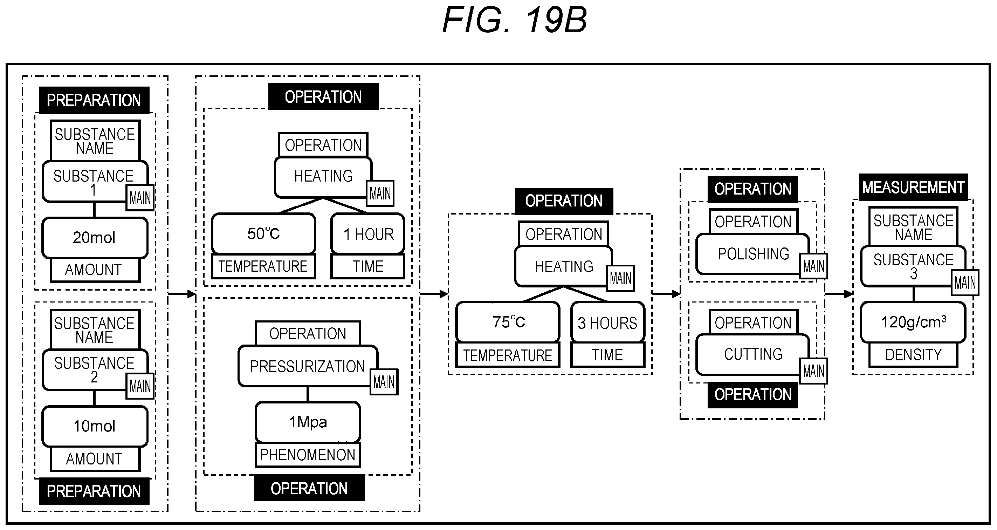

FIG. 11 is a flowchart illustrating an outline of structured data generation processing executed by the structuring processing apparatus 100 according to the first embodiment. FIGS. 12, 13, 14, 15, 16, and 17 are diagrams illustrating examples of information generated by the structuring processing apparatus 100 according to the first embodiment. FIG. 18 is a diagram illustrating an example of structured data generated by the structuring processing apparatus 100 according to the first embodiment. FIGS. 19A and 19B are diagrams illustrating an example of structured data displayed on the user terminal 101 according to the first embodiment.

When detecting an execution trigger, the structuring processing apparatus 100 starts the structured data generation processing. The execution trigger is reception of an execution instruction, detection of an execution timing, or the like. In the following description, processing in a case where an execution instruction including information for identifying one document for which structured data is to be generated is received will be described as an example.

The structuring processing unit 120 acquires text in the designated document from the document database 130, and executes entity extraction processing using the text and entity/category dictionary 400 (step S1100). The structuring processing unit 120 stores extracted entity information in the processing database 150 as entity information 1200.

The entity information 1200 stores entries each including an entity ID 1201, an entity 1202, a location 1203, and a category 1204. One entry exists for one entity. Note that the fields included in the entry are merely examples, and the present invention is not limited thereto.

The entity ID 1201 is a field for storing information for identifying an entity assigned by the structuring processing unit 120. The entity 1202 is a field for storing an expression extracted as an entity. The location 1203 is a field for storing a location of the entity in the text. The category 1204 is a field for storing an entity category.

In the entity extraction processing, the structuring processing unit 120 extracts entities based on the entity/category dictionary 400 and generates entity information 1200 based on an extraction result. Note that the entity extraction method is not limited to the rulebased method. Existing named entity extraction technologies, such as machine learning, can be used.

Next, the structuring processing unit 120 executes entity group generation processing using the extracted entities and the text (step S1200). Specifically, the following processing is executed.

(S1200-1) The structuring processing unit 120 executes document structure analysis processing on the text, and acquires information regarding dependencies between entities. The structuring processing unit 120 generates pairs of entities each having a correspondence relationship based on the information regarding dependencies between entities. Note that the pairs of entities may be generated using a model that has learned the correspondence relationships between the entities. The structuring processing unit 120 stores the generated pair information in the processing database 150 as entity pair information 1300.

The entity pair information 1300 stores entries each including a pair ID 1301, an entity ID 1302, and an entity ID 1303. One entry exists for one pair of entities. Note that the fields included in the entry are merely examples, and the present invention is not limited thereto.

The pair ID 1301 is a field for storing information for identifying a pair of entities. The entity ID 1302 and the entity ID 1303 are fields for storing information for identifying entities forming the pair.

(S1200-2) Referring to the entity pair information 1300, the structuring processing unit 120 generates entity groups by grouping the entities connected based on the correspondence relationships. The structuring processing unit 120 stores the generated entity group information in the processing database 150 as entity group information 1400.

The entity group information 1400 stores entries each including an entity group ID 1401, an entity list 1402, a category 1403, and a main entity ID 1404. One entry exists for one entity group. Note that the fields included in the entry are merely examples, and the present invention is not limited thereto.

The entity group ID 1401 is a field for storing information for identifying an entity group. The entity list 1402 is a field for storing a list of information for identifying entities constituting the entity group. The category 1403 is a field for storing a procedure category. The main entity ID 1404 is a field for storing information for identifying a main entity of the entity group. At this time, the category 1403 and the main entity ID 1404 of each entry are blank.

The entity group generation processing has been described so far.

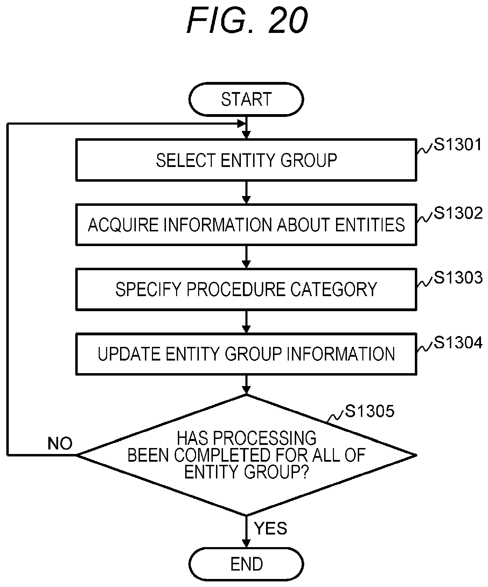

Next, the structuring processing unit 120 executes procedure category determination processing using the procedure category determination rule information 500 (step S1300). The procedure category determination processing will be described in detail with reference to FIG. 20. The result of the procedure category determination processing is reflected in the category 1403 for each entry of the entity group information 1400.

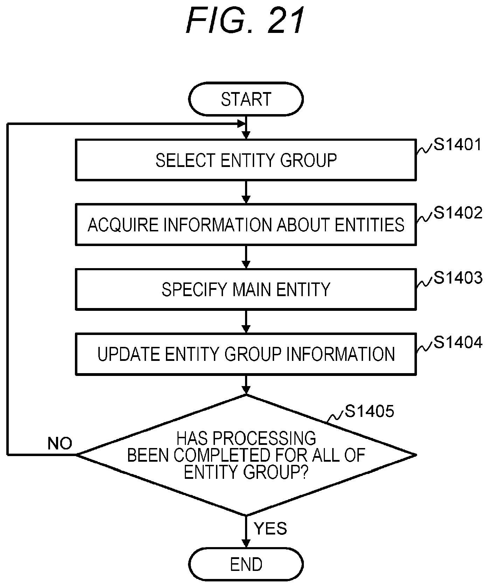

Next, the structuring processing unit 120 executes main entity determination processing using the main entity determination rule information 600 (step S1400). The main entity determination processing will be described in detail with reference to FIG. 21. The result of the main entity determination processing is reflected in the main entity ID 1404 for each entry of the entity group information 1400.

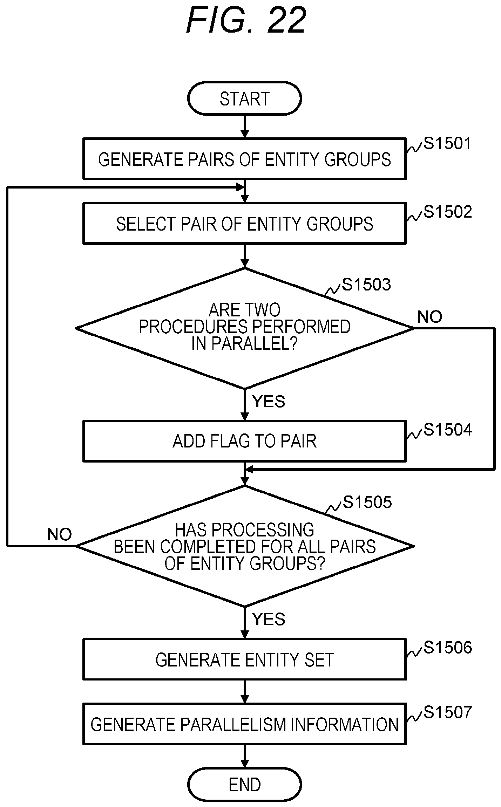

Next, the structuring processing unit 120 executes parallelism determination processing using the parallelism determination rule information 700 (step S1500). The parallelism determination processing will be described in detail with reference to FIG. 22. The result of the parallelism determination processing is stored in the processing database 150 as parallelism information 1500.

The parallelism information 1500 stores entries each including an entity set ID 1501 and an entity group list 1502. One entry exists for a group of entity groups performed in parallel. In the following description, the group of entity groups performed in parallel will be referred to as an entity set. Note that the fields included in the entry are merely examples, and the present invention is not limited thereto.

The entity set ID 1501 is a field for storing information for identifying an entity set. The entity group list 1502 is a field for storing information for identifying entity groups constituting the entity set.

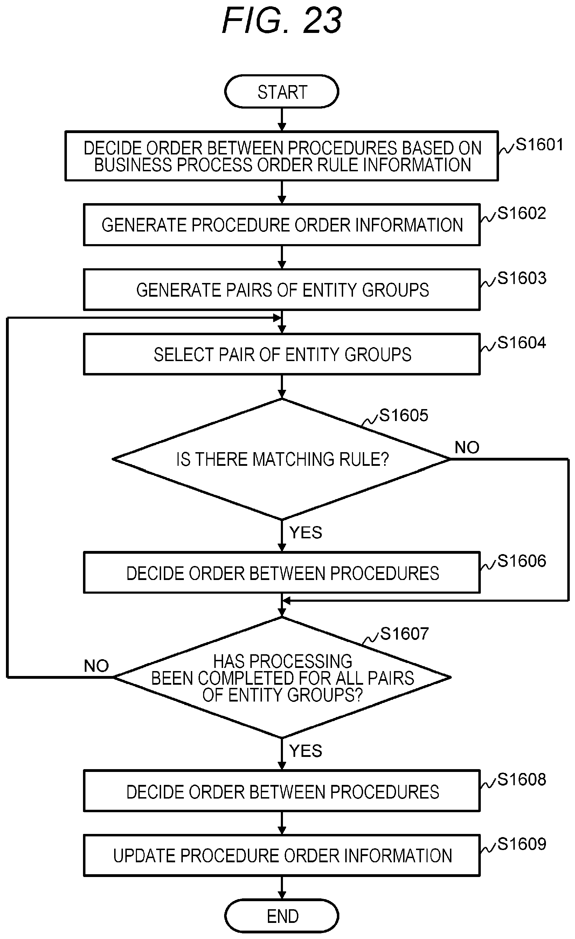

Next, the structuring processing unit 120 executes procedure order determination processing using the business process order determination rule information 800, the procedure order determination rule information 900, and the relationship definition information 1000 (step S1600). The procedure order determination processing will be described in detail with reference to FIG. 23. The result of the procedure order determination processing is stored in the processing database 150 as procedure order information 1600.

The procedure order information 1600 stores entries each including an order pair ID 1601, an entity group ID (before) 1602, and an entity group ID (after) 1603. One entry exists for a pair of entity groups corresponding to procedures between which an order relationship is defined. Note that the fields included in the entry are merely examples, and the present invention is not limited thereto.

In the first embodiment, the order between procedures is expressed as a direction toward an edge connecting nodes (entity groups) in the GraphML format. Note that the method of expressing the order between procedures is not limited.

The order pair ID 1601 is a field for storing information for identifying a pair of entity groups between which an order relationship is defined. The entity group ID (before) 1602 is a field for storing information for identifying an entity group at the front end. The entity group ID (after) 1603 is a field for storing information for identifying an entity group at the rear end.

Next, the structuring processing unit 120 executes consistency confirmation processing using the parallelism determination rule information 700, the business process order determination rule information 800, the procedure order determination rule information 900, and the relationship definition information 1000 (step S1700). Note that the consistency confirmation processing does not need to be executed.

Specifically, the structuring processing unit 120 determines whether the information registered in the entity information 1200, the parallelism information 1500, and the procedure order information 1600 is consistent with the rules defined using the parallelism determination rule information 700, the business process order determination rule information 800, the procedure order determination rule information 900, and the relationship definition information 1000. When there is information that is not consistent, the structuring processing unit 120 stores the non-consistent information in the processing database 150 as consistency confirmation information 1700.

The consistency confirmation information 1700 stores entries each including a confirmation ID 1701, a target 1702, and a rule ID 1703. One entry exists for one violation. Note that the fields included in the entry are merely examples, and the present invention is not limited thereto.

The confirmation ID 1701 is a field for storing information for identifying an entry. The target 1702 is a field for storing identification information indicating a target of the violation. In the target 1702, for example, information for identifying an order pair and an entity set is stored. The rule ID 1703 is a field for storing information for identifying a rule that the target violates.

Next, the structuring processing unit 120 executes structured data output processing using the entity information 1200, the entity pair information 1300, the entity group information 1400, the parallelism information 1500, the procedure order information 1600, and the consistency confirmation information 1700 (step S1800). Specifically, the structuring processing unit 120 generates data representing a graph in which entity groups are nodes as structured data, and stores the generated structured data in the structured data database 160. The structured data is, for example, GraphML format data as illustrated in FIG. 18. Note that the entity groups corresponding to procedures executed in parallel may be grouped together in one node.

The structured data illustrated in FIG. 18 includes entries each defining a node (entity group) of the graph, entries each defining a main entity of the entity group, entries each defining a connection relationship between nodes, and the like.

The display unit 180 of the user terminal 101 displays screens as illustrated in FIGS. 19A and 19B by using the structured data. A dotted box represents an entity group. An icon representing a procedure category is displayed in the entity group. In a box representing an entity, an icon representing an entity category and a main entity is displayed. Note that an alternated long and short dash line box represents a collection of procedures (entity groups) executed in parallel.

The structuring processing unit 120 determines not only a simple order between entity groups but also parallelism between the entity groups to generate structured data. As a result, it is possible to accurately structure a business process including procedures performed in parallel. In addition, the structuring processing unit 120 determines an order between procedures by using a rule based on main entities and a rule based on procedure categories. In this way, it is possible to accurately structure a business process using a small number of rules. Note that the rule based on procedure categories is not necessarily required.

FIG. 20 is a flowchart illustrating an example of the procedure category determination processing executed by the structuring processing apparatus 100 according to the first embodiment.

The structuring processing unit 120 selects an entity group (step S1301). Specifically, the structuring processing unit 120 selects one entry from among the entity group information 1400.

The structuring processing unit 120 acquires information about each entity included in the entity group (step S1302). Specifically, the structuring processing unit 120 acquires entity categories from the entity information 1200 based on the identification information registered in the entity list 1402 of the entry.

The structuring processing unit 120 specifies a procedure category based on the respective entity categories of the entities included in the entity group and the procedure category determination rule information 500 (step S1303). Specifically, the structuring processing unit 120 determines a rule set in the rule 504 of each entry, and acquires a value of the category 503 of the entry corresponding to the matched rule.

The structuring processing unit 120 updates the entity group information 1400 (step S1304). Specifically, the structuring processing unit 120 sets the specified procedure category in the category 1403 of the entry selected in step S1301.

The structuring processing unit 120 determines whether the processing has been completed for all the entries of the entity group information 1400 (step S1305).

When the processing has not been completed for all the entries of the entity group information 1400, the structuring processing unit 120 returns to S1301. When the processing has been completed for all the entries of the entity group information 1400, the structuring processing unit 120 ends the procedure category determination processing.

FIG. 21 is a flowchart illustrating an example of the main entity determination processing executed by the structuring processing apparatus 100 according to the first embodiment.

The structuring processing unit 120 selects an entity group (step S1401). Specifically, the structuring processing unit 120 selects one entry from among the entity group information 1400.

The structuring processing unit 120 acquires information about each entity included in the entity group (step S1402). Specifically, the structuring processing unit 120 acquires entity categories from the entity information 1200 based on the identification information registered in the entity list 1402 of the entry.

The structuring processing unit 120 specifies an entity that is a main entity based on the respective entity categories of the entities included in the entity group and the main entity determination rule information 600 (step S1403). Specifically, the structuring processing unit 120 determines a rule set in the rule 602 of each entry and specifies an entity that matches the rule.

The structuring processing unit 120 updates the entity group information 1400 (step S1404). Specifically, the structuring processing unit 120 sets information for identifying the entity specified as a main entity in the main entity ID 1404 of the entry selected in step S1401.

The structuring processing unit 120 determines whether the processing has been completed for all the entries of the entity group information 1400 (step S1405).

When the processing has not been completed for all the entries of the entity group information 1400, the structuring processing unit 120 returns to step S1401. When the processing is completed for all the entries of the entity group information 1400, the structuring processing unit 120 ends the main entity determination processing.

FIG. 22 is a flowchart illustrating an example of the parallelism determination processing executed by the structuring processing apparatus 100 according to the first embodiment.

The structuring processing unit 120 generates pairs of entity groups (step S1501). For example, it may be considered to generate pairs of entity groups of which the main entities are located close to each other. In the present invention, the method of generating pairs of entity groups is not limited.

The structuring processing unit 120 selects a pair of entity groups (step S1502).

The structuring processing unit 120 determines whether two procedures corresponding to the entity groups forming the pair are performed in parallel based on the text, the main entities of the entity groups forming the pair, and the parallelism determination rule information 700 (step S1503). For example, the determination is made based on a word included in a sentence connecting a main entity of one entity group and a main entity of another entity group.

When the two procedures are not performed in parallel, the structuring processing unit 120 proceeds to step S1505.

When the two procedures are performed in parallel, the structuring processing unit 120 adds a flag indicating that the procedures are performed in parallel to the pair (step S1504), and then proceeds to step S1505.

In step S1505, the structuring processing unit 120 determines whether the processing has been completed for all the pairs of entity groups (step S1505).

When the processing has not been completed for all the pairs of entity groups, the structuring processing unit 120 returns to step S1502.

When the processing has been completed for all the pairs of entity groups, the structuring processing unit 120 generates an entity set based on the information on the pairs to which the flags are added (step S1506). Specifically, the structuring processing unit 120 generates an entity set by merging pairs including identical entity groups.

The structuring processing unit 120 generates information about the entity set as the parallelism information 1500 (step S1507) and stores the parallelism information in the processing database 150.

FIG. 23 is a flowchart illustrating an example of the procedure order determination processing executed by the structuring processing apparatus 100 according to the first embodiment.

The structuring processing unit 120 decides an order of each procedure based on the business process order determination rule information 800 (step S1601), and generates procedure order information 1600 based on a processing result (step S1602). Specifically, the structuring processing unit 120 decides a rough procedure order based on the business process order determination rule information 800. Furthermore, the structuring processing unit 120 decides an order of each procedure based on the location or the like of the main entity included in the entity group.

The structuring processing unit 120 generates pairs of entity groups (step S1603). For example, it may be considered to generate pairs of entity groups of which the main entities are located close to each other. In the present invention, the method of generating pairs of entity groups is not limited.

The structuring processing unit 120 selects a pair of entity groups (step S1604).

Referring to the procedure order determination rule information 900 and the relationship definition information 1000, the structuring processing unit 120 determines whether there is a rule that matches the pair of entity groups (step S1605).

When there is no rule matching the pair of entity groups, the structuring processing unit 120 proceeds to step S1607.

When there is a rule that matches the pair of entity groups, the structuring processing unit 120 decides an order between procedures corresponding to the two entity groups forming the pair based on the order 902 of the entry corresponding to the matching rule (step S1606), and then proceeds to step S1607.

In step S1607, it is determined whether the processing has been completed for all the pairs of entity groups (step S1607).

When the processing has not been completed for all the pairs of entity groups, the structuring processing unit 120 returns to step S1604.

When the processing has been completed for all the pairs of entity groups, the structuring processing unit 120 decides an order between the procedures based on a result of determining the pairs of entity groups (step S1608).

The structuring processing unit 120 updates the procedure order information 1600 based on a processing result in step S1608 (step S1609).

Note that the structuring processing apparatus 100 does not need to hold the business process order determination rule information 800. In this case, the determination of the order between the procedures using the business process order determination rule information 800 is not performed, the procedure category determination processing can be omitted. The structuring processing apparatus 100 may decide an order between the procedures based on the procedure order determination rule information 900 and the relationship definition information 1000.

As described above, the structuring processing apparatus 100 according to the first embodiment can accurately generate structured data from a document in which a business process is described. Since the rules for determining the order between the procedures are only the rule based on the relationships between the main entities and the rule based on the relationships between the order between the procedures and the procedure categories, the cost required for setting the rules can be suppressed.

Note that it is not necessary to use a rule in determining a procedure category and a main entity. For example, a procedure category and a main entity may be determined using a model generated by learning processing.

Note that it is not necessary to use a rule in determining an order between procedures. For example, an order between procedures may be determined using a model generated by learning processing using words between main entities and a model generated by learning processing using data indicating relationships between the order between procedures and the procedure categories. Alternatively, an order between procedures may be determined by combining a rule and a model.

Note that a rule may be set using sub-entities.

### [Second Embodiment]

In the present embodiment, processing of complementing information omitted in the document using the structured data generated in the first embodiment will be described. For example, according to the examples shown in FIGS. 19A and 19B, a node corresponds to an entity set, but in the present embodiment, a node may correspond to an entity.

In the description of the present embodiment, differences from the first embodiment will be mainly described, and descriptions of common points with the first embodiment will be omitted or simplified.

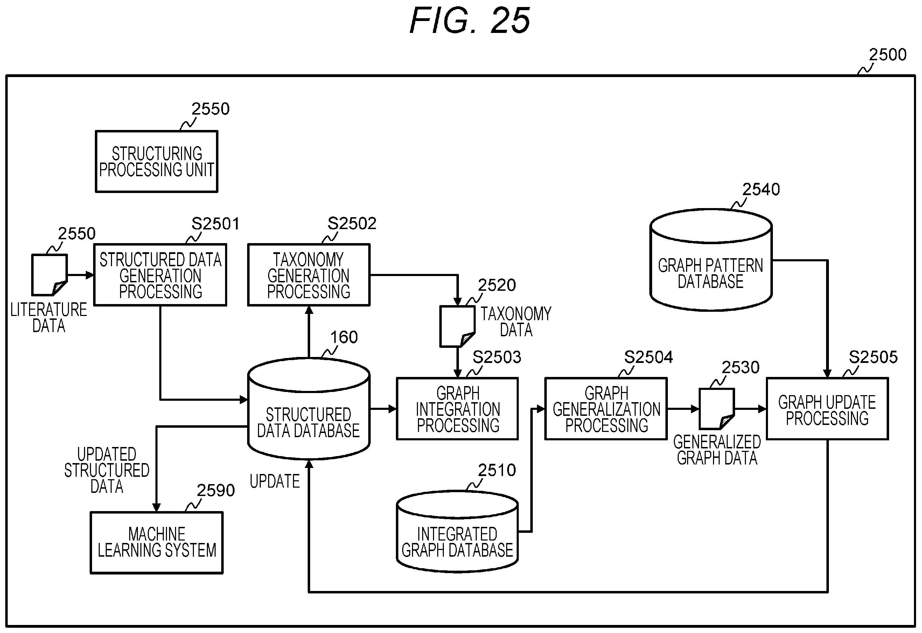

FIG. 25 is a diagram illustrating an example of an overall flow according to the second embodiment.

A structuring processing unit 2550 in a structuring processing apparatus 2500 according to the second embodiment generate structured data (see FIG. 18) from literature data 2550 by executing the structured data generation processing (step S2501) according to the first embodiment. The structured data is stored in structured data database 160.

Next, referring to the structured data in the structured data database 160, the structuring processing unit 2550 generates taxonomy data 2520 by executing taxonomy generation processing (step S2502). The structuring processing unit 2550 generates integrated graph data by executing graph integration processing (step S2503) using the structured data in the structured data database 160 and the generated taxonomy data 2520. The generated integrated graph data is stored in an integrated graph database 2510.

The structuring processing unit 2550 converts the integrated graph data in the integrated graph database 2510 into generalized graph data 2530 by performing graph generalization processing (step S2504). In graph update processing (step S2505), the structuring processing unit 2550 matches the generalized graph represented by the generalized graph data 2530 with a graph pattern represented by a graph pattern database 2540, thereby specifying information omitted in the document represented by the literature data 2550 and complementary contents thereof, and updating the structured data.

Similarly to the databases 130, 140, 150, and 160 described above, the integrated graph database 2510 and the graph pattern database 2540 may be stored in storage devices (for example, at least parts of the main storage device 202 and the auxiliary storage device 203) of one or more computers 200 based on the structuring processing apparatus 2500. In addition, the generated taxonomy data 2520 and generalized graph data 2530 may be stored in the processing database 150.

Furthermore, a machine learning system 2590 may be provided inside or outside the structuring processing apparatus 2500. The machine learning system 2590 may receive an input of information (for example, an input of information indicating a result) and input the information to the machine learning model, thereby outputting information (for example, information indicating a means for obtaining a result (e.g., a process, a recipe, or the like)). The machine learning model may be a neural network or another model. The data for training the machine learning model includes structured data. In the present embodiment, since the structured data complemented with respect to the structured data generated in the first embodiment (updated structured data) is included in the training data, machine learning that further improves the accuracy of the machine learning model is expected. The machine learning system 2590 may be a functional unit or a computer system based on one or more computers.

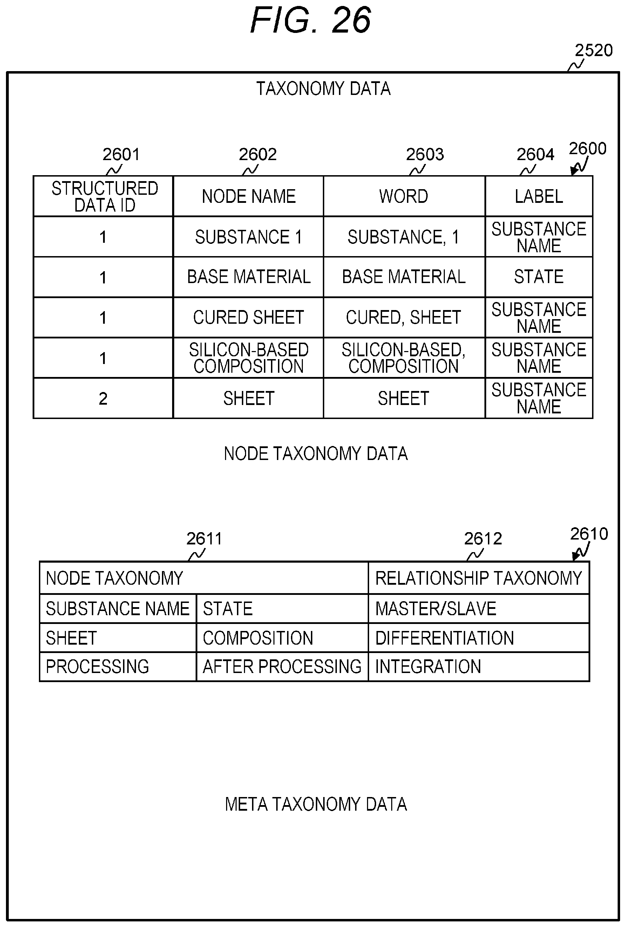

FIG. 26 is a diagram illustrating an example of the taxonomy data 2520 according to the second embodiment.

The taxonomy data 2520 includes node taxonomy data 2600 for managing correspondence relationships between nodes and taxonomies in the structured data, and meta taxonomy data 2610 for managing correspondence relationships between the taxonomies.

The node taxonomy data 2600 stores entries each including a structured data ID 2601, a node name 2602, a word 2603, and a label 2604. One entry exists for one expression (entity). Note that the fields included in the entry are merely examples, and the present invention is not limited thereto.

The structured data ID 2601 is a field for storing information for identifying structured data. The node name 2602 is a field for storing information indicating an entity in the structured data. The word 2603 is a field for storing information indicating individual words constituting the entity in the node name 2602. The label 2604 is a field for storing information indicating a label taxonomy of the entity.

For example, according to the first entry of the node taxonomy data 2600, it is found that the entity "substance 1" of the first structured data includes "substance" and "1" as word taxonomies and belongs to "substance name" as a label taxonomy.

Next, the meta taxonomy data 2610 stores entries each including a node taxonomy 2611 and a relationship taxonomy 2612. One entry exists for one node taxonomy set. Note that the fields included in the entry are merely examples, and the present invention is not limited thereto. The "node taxonomy set" refers to one or more node taxonomies. The "node taxonomy" is a word taxonomy or a label taxonomy.

The node taxonomy 211 is a field for storing information indicating one or more word taxonomies and/or one or more label taxonomies. The relationship taxonomy 2612 is a field for storing information indicating a relationship taxonomy assigned to the node taxonomy set. The information indicating the relationship taxonomy corresponds to meta information of the node taxonomy set.

For example, according to the first entry of the meta taxonomy data 2610, it can be seen that the relationship taxonomy "master" is assigned to the label taxonomy "substance name" as the node taxonomy, that is, an entity belonging to the label taxonomy "substance name" is a main entity. Note that the relationship taxonomy "slave" refers to a dependent entity that depends on the main entity. The dependent entity may be synonymous with the sub-entity described above.

The taxonomy data 2520 is data generated from the structured data. For example, one or more pieces of structured data may exist for each piece of literature data 2550. The taxonomy data 2520 may be generated based on structured data of one or more documents.

The structured data used in the second embodiment may be structured data prepared by a method different from the method described in the first embodiment. Furthermore, the literature data 2550 is an example of document data, but the document data may be data in a format other than text format, for example, data in a table format.

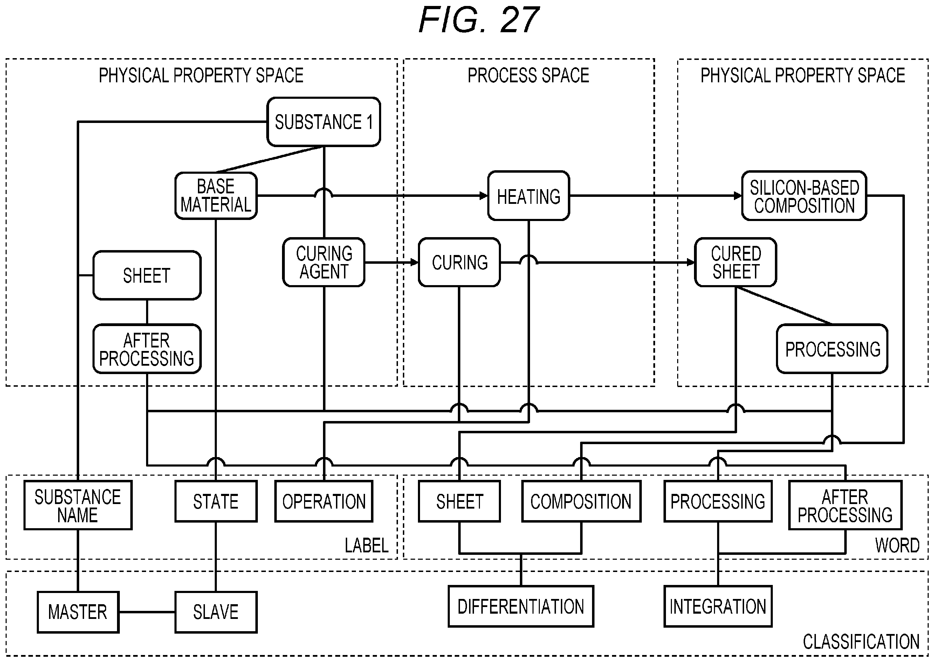

FIG. 27 is a diagram illustrating an example of an integrated graph indicated by integrated graph data according to the second embodiment.

Each of the node taxonomies and the relationship taxonomies is expressed as a graph node. Hereinafter, a node expressing a node taxonomy will be referred to as a "node taxonomic node", and a node expressing a relationship taxonomy will be referred to as a "relationship taxonomic node".

In the integrated graph, a node taxonomic node suitable for an entity (node) in the graph represented by the structured data is connected to the entity by an edge, and a relationship taxonomic node corresponding to each node taxonomic node is connected to the node taxonomic node by an edge. The "node taxonomic node suitable for the entity" is a node representing a word obtained from the entity (word taxonomic node) or a node representing a label assigned to the entity (label taxonomic node). The "relationship taxonomic node corresponding to the node taxonomic node" is a relationship taxonomic node expressing a relationship taxonomy specified from the meta taxonomy data 2610 as a relationship taxonomy corresponding to a node taxonomy expressed by a node taxonomic node.

For example, since "substance 1" in the structured data belongs to "substance name", "substance 1 node" and "substance name node" are connected to each other.

Note that, as exemplified in FIG. 27, in the integrated graph, each of the edges connecting the entities (nodes) and the node taxonomic nodes in the graph represented by the structured data and the edges connecting the node taxonomic nodes and the relationship taxonomic nodes may be a directed edge or an undirected edge. In the integrated graph exemplified in FIG. 27, some edges (e.g., an edge connecting the node "silicon-based composition" and the node taxonomic node "substance name") are not illustrated.

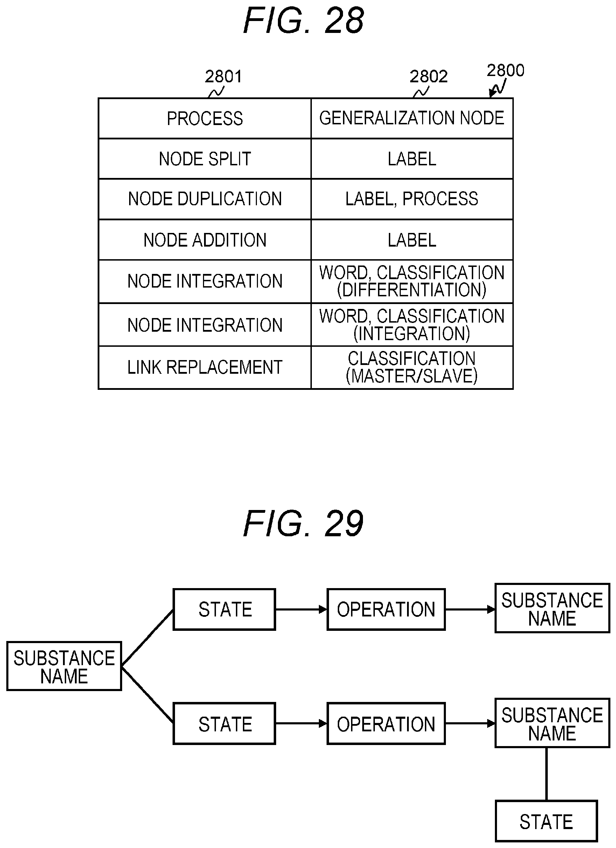

FIG. 28 is a diagram illustrating an example of processing list data according to the second embodiment.

The processing list data 2800 stores entries each including a process 2801 and a generalization node 2802. One entry exists for one complementing process. Note that the fields included in the entry are merely examples, and the present invention is not limited thereto.

The process 2801 is a field for storing information indicating a structured data complementing process. The generalization node 2802 is a field for storing information indicating a taxonomy (a taxonomy represented by a node in a generalized graph) used when generalizing structured data.

For example, according to the first entry, it can be seen that a node "label taxonomy" is included in a generalized graph generated by applying a complementing process "node split" to the structured data. In addition, for example, according to the second entry, it can be seen that a node "label taxonomy" and a node "process taxonomy" are included in a generalized graph generated by applying a complementing process "node duplication" to the structured data.

FIG. 29 is a diagram illustrating an example of a generalized graph indicated by the generalized graph data 2530 according to the second embodiment.

The generalized graph is obtained by replacing each node in the structured data with a taxonomy.

For example, in the example of FIG. 29, in the generalized graph, each entity node (a node expressing an entity) in the graph indicated by the structured data of which the structured data ID is "1" is replaced with a taxonomic node (a node expressing a taxonomy). The taxonomy expressed by the replaced node is a taxonomy specified from a generalization node 2802 corresponding to a complementing process including the replacement (a taxonomy specified from the processing list data 2800).

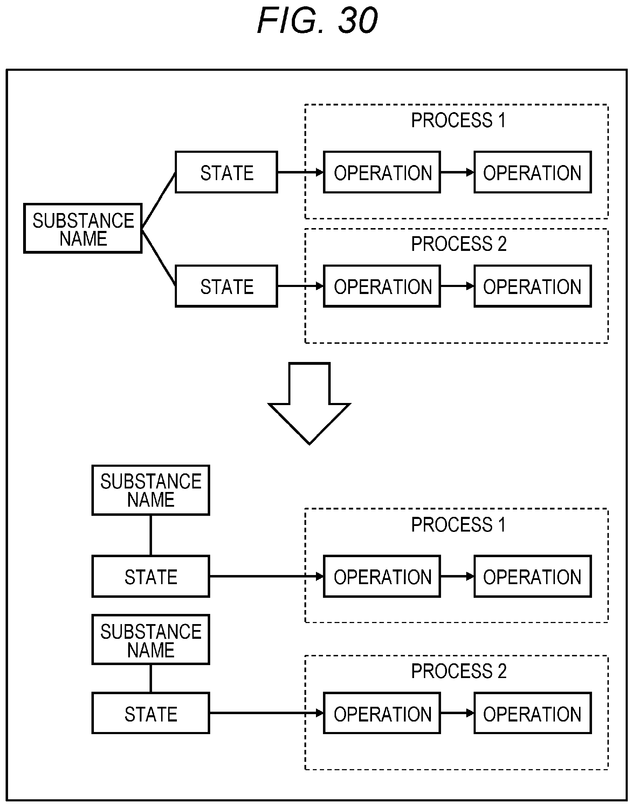

FIG. 30 is a diagram illustrating an example of a graph pattern indicated by the graph pattern database 2540 according to the second embodiment.

The graph pattern includes a matching graph for specifying an omitted portion and a complementing graph for specifying a complementing method. Specifically, in the graph pattern, the "matching graph" is all or a part of the generalized graph before being subjected to the complementing process, and is a pattern of a graph to be subjected to the complementing process according to the graph pattern. In addition, in the graph pattern, the "complementing graph" is a pattern of a graph after the complementing process according to the graph pattern is applied to the matching graph (that is, a graph after being subjected to the complementing process).

For example, the graph pattern according to the example of FIG. 30 indicates that, as illustrated in the example of the generalized graph of FIG. 29, in a case where the same label for the same substance name is used in a plurality of processes, in order to complement the structured data, a graph including a node for a substance name may be split into graphs each including a node for the substance name for each process.

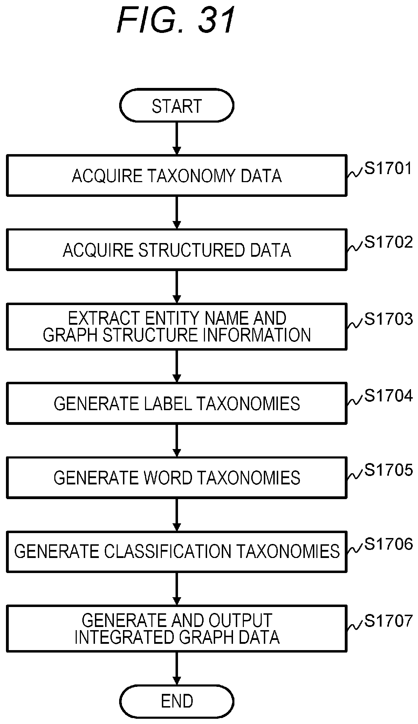

FIG. 31 is a flowchart illustrating an example of the graph integration processing (step S2503 in FIG. 25) executed by the structuring processing apparatus 2500 according to the second embodiment.

The structuring processing unit 120 acquires the taxonomy data 2520 (step S1701) and acquires the structured data (step S1702). The taxonomy data 2520 may be generated and acquired in the graph integration processing, or may be generated by the structuring processing unit 120 based on structured data of one or more literatures including a literature corresponding to the structured data and stored in the structured data database 160 when the structured data is generated.

Next, the structuring processing unit 120 extracts entity name and graph structure information included in process information (at least some of information of structured data) (step S1703), and based on the taxonomy data 2520, generates label taxonomies (step S1704), generates word taxonomies (step S1705), and generates relationship taxonomies (step S1706). Here, the process information is information indicating entity groups and connection relationships between entity groups as in the examples illustrated in FIGS. 19A and 19B.

The structuring processing unit 120 generates an integrated graph including the generated taxonomies as nodes, and outputs integrated graph data indicating the integrated graph (step S1707). The output data is stored in the integrated graph database 2510. In the integrated graph, a node taxonomic node suitable for a node indicated by the structured data is connected to the node, and a relationship taxonomic node suitable for the node is connected to the node taxonomic node.

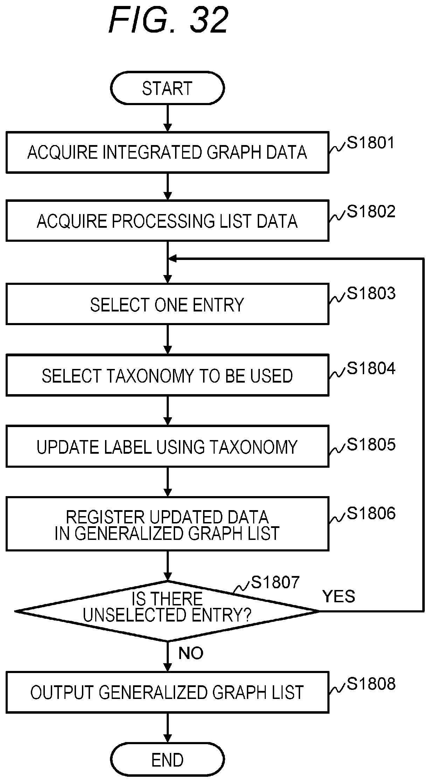

FIG. 32 is a flowchart illustrating an example of graph generalization processing (step S2504 in FIG. 25) executed by the structuring processing apparatus 2500 according to the second embodiment.

The structuring processing unit 120 acquires the integrated graph data (step S1801) and acquires the processing list data 2800 (step S1802).

Next, the structuring processing unit 120 selects one entry from the processing list data 2800 (step S1803). Steps S1804 to S1806 are performed for the selected entry.

That is, the structuring processing unit 120 specifies a taxonomy represented by the generalization node 2802 of the selected entry (step S1804), updates a node represented by the structured data to a node expressing the taxonomy (step S1805), and registers the generalized graph data 2530 in which the node represented by the structured data is replaced with the taxonomic node in a generalized graph list (step S1806). The generalized graph data 2530 may be registered in, for example, a generalized graph list that is not illustrated.

Thereafter, the structuring processing unit 120 determines whether there is an unselected entry in the processing list data 2800 (step S1807). When there is an unselected entry, the processing returns to step S1803. When there is no unselected entry, the structuring processing unit 120 outputs the generated generalized graph list (S1808). The generalized graph list may be stored in the processing database 150.

In this way, one integrated graph is generated for one or more graphs represented by structured data extracted from one literature, and a generalized graph corresponding to each complementing process is generated from one integrated graph for the complementing process.

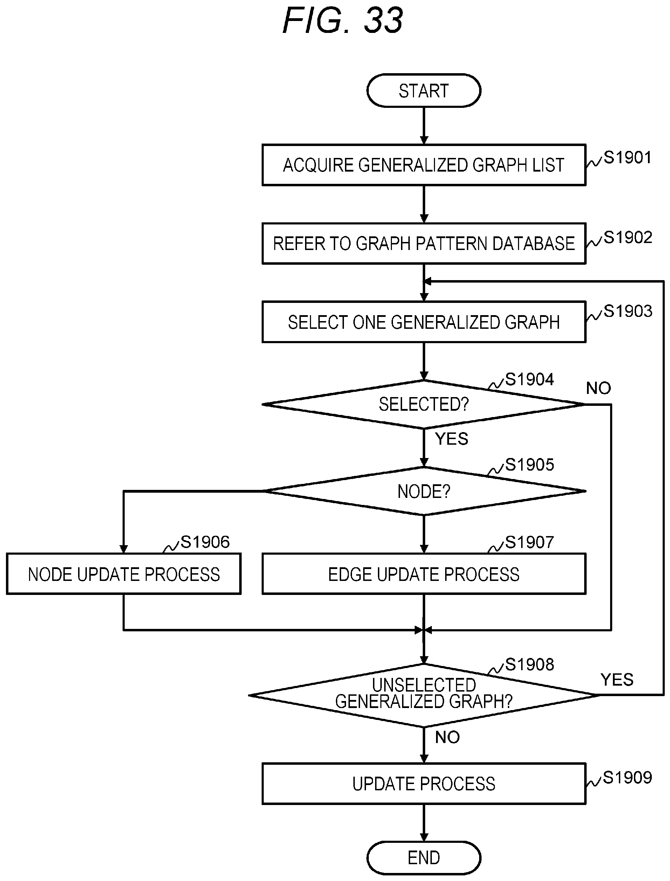

FIG. 33 is a flowchart illustrating an example of the graph update processing (step S2505 in FIG. 25) executed by the structuring processing apparatus 2500 according to the second embodiment.

The structuring processing unit 120 acquires the generalized graph list (step S1901), and refers to the graph pattern database 2540 (step S1902).

Next, the structuring processing unit 120 selects one generalized graph from the generalized graph list (step S1903). Steps S1904 to S1907 are performed for the selected generalized graph.

That is, the structuring processing unit 120 calculates a similarity between a graph structure of the selected generalized graph and a graph structure of a matching graph in a graph pattern (a graph pattern represented by the graph pattern database 2540) for a complementing process corresponding to the selected generalized graph, and determines whether to select the graph pattern based on the calculated similarity (step S1904). This determination may be made as to whether the similarity is equal to or greater than a similarity threshold. As a method of comparing the graph structures for calculating the similarity, a graph neural network (GNN) such as GraphSAGE may be used. When the result of the determination is false, the processing proceeds to step S1908. Note that, in a case where there is a plurality of graph patterns for the complementing process corresponding to the selected generalized graph, the determination in step S1904 may be performed for each graph pattern.

When the result of the determination is true, the structuring processing unit 120 performs a "process" represented by the graph pattern for each selected graph pattern. That is, the structuring processing unit 120 performs a node update process when the graph pattern is a node update pattern (step S1906), and performs an edge update process when the graph pattern is an edge update pattern (step S1907). Note that, depending on the selected graph pattern, both steps S1906 and S1907 may be performed for the selected generalized graph.

Thereafter, the structuring processing unit 120 determines whether there is an unselected generalized graph in the generalized graph list (step S1908). When there is an unselected generalized graph, the processing returns to step S1903. When there is no unselected generalized graph, the structuring processing unit 120 applies, for each generalized graph in which at least one graph pattern is selected, each of one or more updated generalized graphs obtained based on the generalized graph to the structured data (the structured data selected in the graph integration processing). That is, the structured data is updated. The structuring processing unit 120 outputs the updated structured data (step S1909). The output updated structured data is stored in the structured data database 160. The updated structured data may exist for each updated generalized graph (may be structured data to which the updated generalized graph is applied), or a plurality of updated generalized graphs may be applied to one piece of structured data.

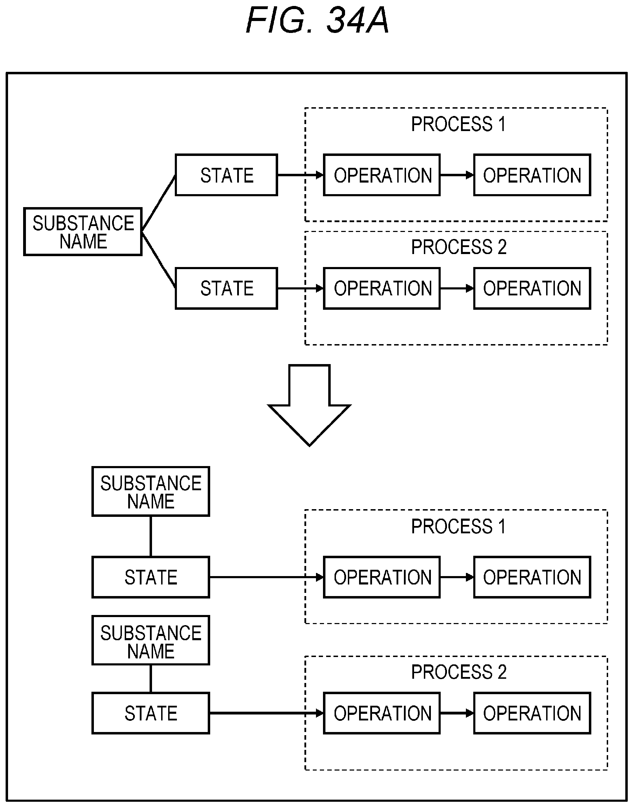

FIGS. 34A to 34H are diagrams illustrating examples of a plurality of graph patterns (a plurality of graph patterns represented by the graph pattern database 2540) according to the second embodiment.

The graph patterns include two graph patterns for "condition" (matching graph) and "process" (complementing graph). When the generalized graph matches the graph structure pattern for "condition" (matching graph) (for example, when the similarity between all or some of the generalized graphs and the matching graph satisfies the similarity condition), the relevant graphs among the generalized graphs are replaced with the graph structure for "process" (complementing graph) in step S1906 or step S1906. In this way, the generalized graph is updated, and the structured data can be updated by applying the updated generalized graph to the structured data. The "relevant graphs" referred to in this paragraph are all or some of the generalized graphs.

FIG. 34A illustrates an example of a split pattern. The "condition" for the split pattern is that identical label nodes (e.g., "state" nodes) of the same "substance" node are connected to "operation" nodes of a plurality of processes. The "process" for the split pattern is to split a graph including a "substance" node into graphs each including a "substance" node for each process (an "operation" node of one process is connected to each "substance" node after split).

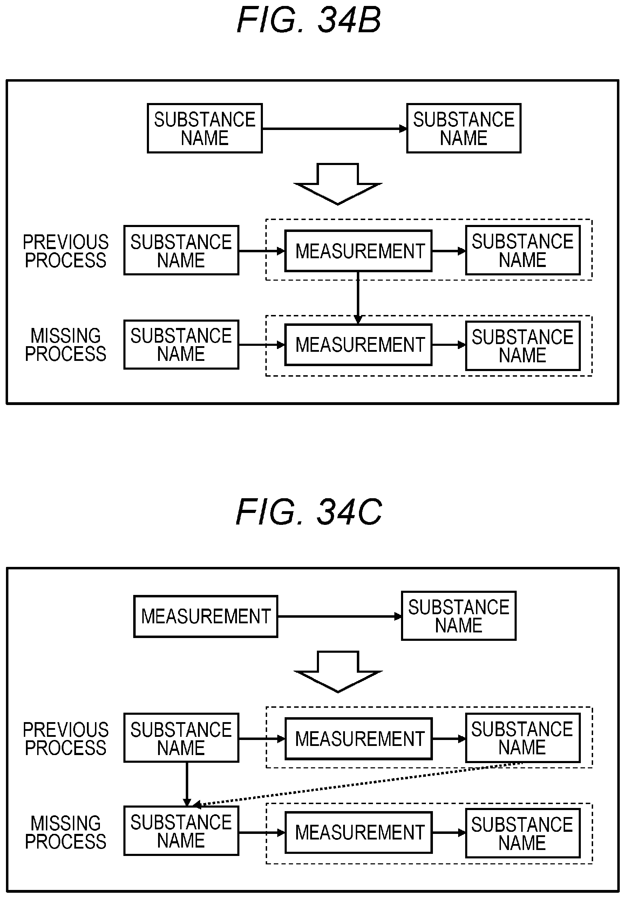

FIG. 34B illustrates an example of a duplication pattern 1. The "condition" for the duplication pattern 1 is that there is a direct connection (a connection not through another node) from a "substance" node to a "substance" node and an "operation" node is missing. A process corresponding to a node set in which a node is missing will be referred to as a "missing process" for convenience. The "process" for the duplication pattern 1 is to duplicate an "operation" node of a previous process of the missing process (a process immediately before the missing process) between the "substance" node and the "substance" node (that is, to complement the node set corresponding to the missing process with an "operation" node, which is an example of the missing node). According to the example illustrated in FIG. 34B, the node set corresponding to the missing process is complemented with a node of which the node name is "measurement" that belongs to "operation" as the "operation" node.

FIG. 34C illustrates an example of a duplication pattern **2.** The "condition" for the duplication pattern 2 is that a "substance" node is missing before an "operation" node, that is, a head node of a node set corresponding to a missing process is an "operation" node. The "process" for the duplication pattern 2 is to duplicate a "substance" node of a previous process of the missing process, before the "operation" node (head node) of the missing process, according to the label of the "operation" node. Specific examples of the "process" are as follows.
· If the "operation" corresponding to the head node is "measurement", the "substance" node duplicated before the head node of the missing process is a "substance" node immediately before the "operation" node in the previous process. Note that a node immediately before a node X refers to a parent node of the node X, and specifically, is a node to which a proximal end of a directed edge connected to the node X is connected.
· If the "operation" corresponding to the head node is "synthesis", the "substance" node duplicated before the head node of the missing process is a "substance" node immediately after the "operation" node in the previous process (a child node of the "operation" node). Note that a node immediately after a node X refers to a child node of the node X, and specifically, is a node to which a distal end of a directed edge connected to the node X is connected. In addition, "synthesis" is a node name belonging to the "operation".

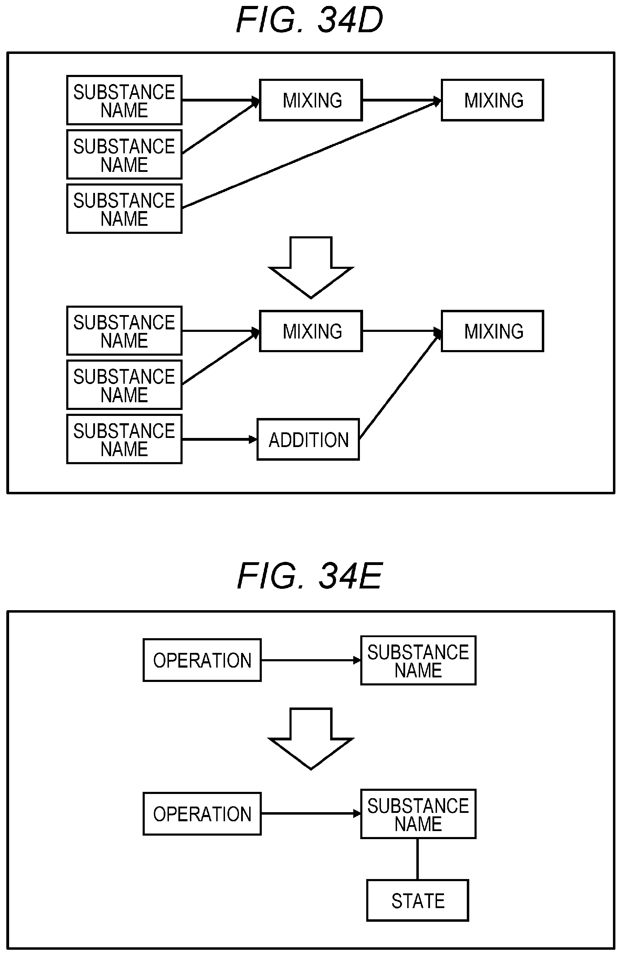

FIG. 34D illustrates an example of an addition pattern 1. The "condition" for the addition pattern 1 is that there is a "substance" node (new "substance" node) other than a "substance" node immediately before a first "mixing" node as a node immediately before a second "mixing" node immediately after the first "mixing" node. The "process" for the addition pattern 1 is to add an "addition" node between the new "substance" node and the second "mixing" node. Both "mixing" and "addition" are node names belonging to the "operation".

FIG. 34E illustrates an example of an addition pattern 2. The "condition" for the addition pattern 2 is that there is no node expressing a "state" corresponding to an "operation" in a "substance" node immediately after an "operation" node. The "process" for the addition pattern 2 is to add a node expressing a "state" by nominalizing an operation as a "state" node immediately after the "substance" node. Here, the nominalization means that, for example, when the "operation" is "curing", the "state" is "cured product". Since the "state" node is added, the addition pattern 2 corresponds to a node update pattern. The "curing" is a node name of the "operation".

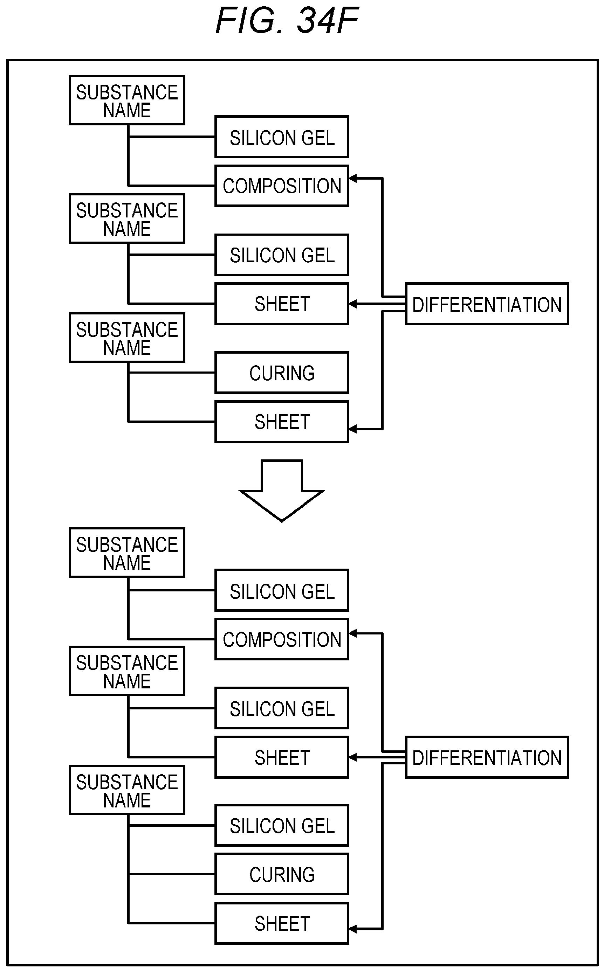

FIG. 34F illustrates an example of an integration pattern 1. The "condition" for the integration pattern 1 is that a combination of word taxonomies to which a relationship taxonomy "differentiation" is connected is assigned to identical label taxonomic nodes. The "combination of word taxonomies to which the relationship taxonomy "differentiation" is connected" mentioned here means that a plurality of word taxonomies represented by the node taxonomy 2611 (see FIG. 26) in the same entry are connected to a plurality of nodes of identical label taxonomies. When this "condition" is satisfied, the "process" for the integration pattern 1 is to integrate combinations to which the relationship taxonomy "differentiation" is not assigned, and duplicate a word taxonomic node to the same label node. For example, in the example of FIG. 34F, when there are three substances: a silicon gel composition, a silicon gel sheet, and a cured sheet, a relationship taxonomy "differentiation" is assigned between the word taxonomies "composition" and "sheet". Therefore, the structuring processing unit 2550 regards the silicon gel sheet and the cured sheet each including the word "sheet" as identical, and regards the silicon gel sheet and the cured sheet as different from the silicon gel composition. Therefore, according to the integration pattern 1, a word taxonomic node "silicon gel" is duplicated on a label taxonomic node to which "curing" and "sheet" belong. This shows that the word "silicon gel" and "curing" can be used interchangeably.

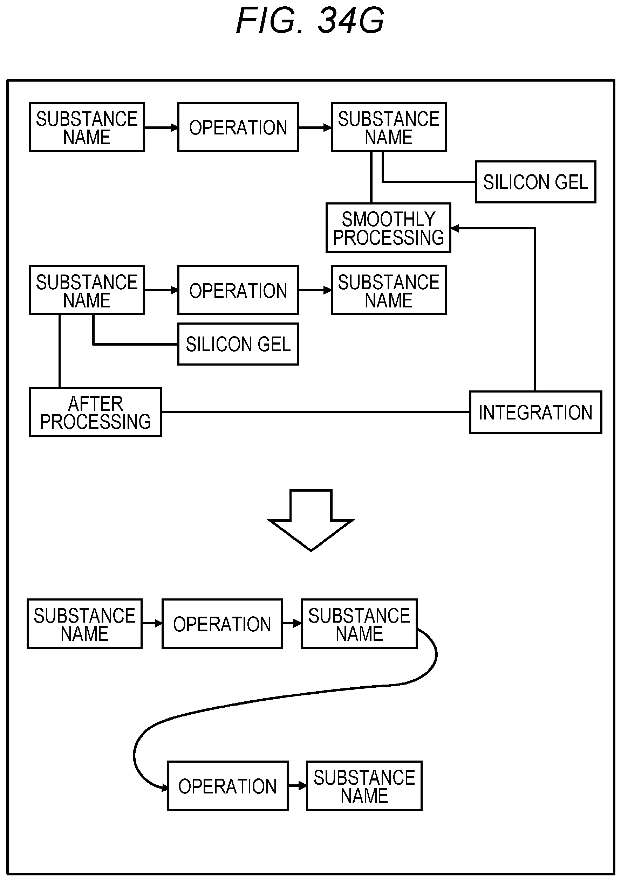

FIG. 34G illustrates an example of an integration pattern 2. The "condition" for the integration pattern 2 is that a same word taxonomy is assigned to identical label taxonomic nodes, and a relationship taxonomy "integration" is assigned to the identical label taxonomic nodes. The "same word taxonomy" mentioned herein also means that a plurality of word taxonomies represented by the node taxonomy 2611 (see FIG. 26) in the same entry are treated as the same word taxonomy. The "process" for the integration pattern 2 is to regard a plurality of label taxonomy nodes to which same word taxonomic nodes to which a relationship taxonomy "integration" is assigned belong as identical, and integrate the plurality of label taxonomy nodes as a continuous operation. For example, according to the example of FIG. 34G, a word taxonomy "silicon gel" and a state label "smoothly processing" are connected to a "substance" node after an operation of a first process, a word taxonomy "silicon gel" and a state label "processing" are connected to a "substance" node before an operation of a second process, and further, a relationship taxonomy "integration" is assigned to the state labels of "smoothly processing" and "processing". Therefore, by integrating the two "substance" nodes, the two processes are integrated into one.

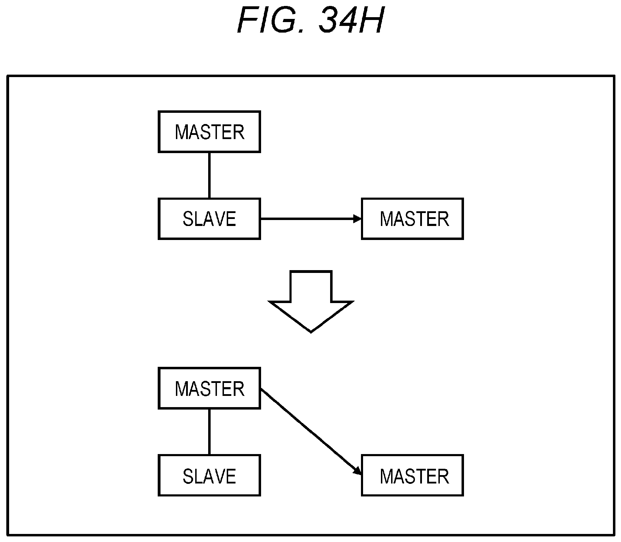

FIG. 34H illustrates an example of a link replacement pattern. The "condition" for the link replacement pattern is that an edge comes out of a "slave" relationship taxonomic node (a proximal end of the edge is connected to the "slave" relationship taxonomic node). The "process" for the link replacement pattern is to replace the proximal end of the edge with a "master" relationship taxonomic node to which the "slave" relationship taxonomic node belongs.

As described above, the structuring processing apparatus 2500 according to the second embodiment can complement information omitted in sentences describing a business process from other literatures without forming rules for linguistic knowledge. In addition, by expressing a graph pattern by a knowledge graph, it is possible to use both automatic pattern generation by AI and manual rule description. As a result, it is possible to reduce the amount of work required for extracting and structuring process information.

Note that, instead of a matching graph, a feature vector of a GNN that was matched in the past may be adopted for a graph pattern. For example, for each graph pattern, a feature vector of a GNN that was matched in the past may be associated by the structuring processing unit 2550. For each graph pattern, the structuring processing unit 2550 may determine whether a generalized graph matches the graph pattern based on a similarity (a cosine distance of a vector) between a feature vector of the generalized graph (a feature vector generated from the generalized graph using a GNN) and a feature vector associated with the graph pattern.

### [Third Embodiment]

In the present embodiment, a process of complementing information according to Example Y (e.g., Y=2), in which only a difference from Example X (e.g., X=1) is described in a literature indicated by the literature data 2550 using the information of the integrated graph generated according to the second embodiment will be described. In the present embodiment, differences from the second embodiment will be mainly described, and descriptions of common points with the second embodiment will be omitted or simplified. In addition, in order to avoid confusion between the embodiments described in the present specification and the embodiments described in the literature indicated by the literature data 2550, an embodiment described in the literature may be referred to as a "literature example" in the third embodiment (and fourth embodiment).

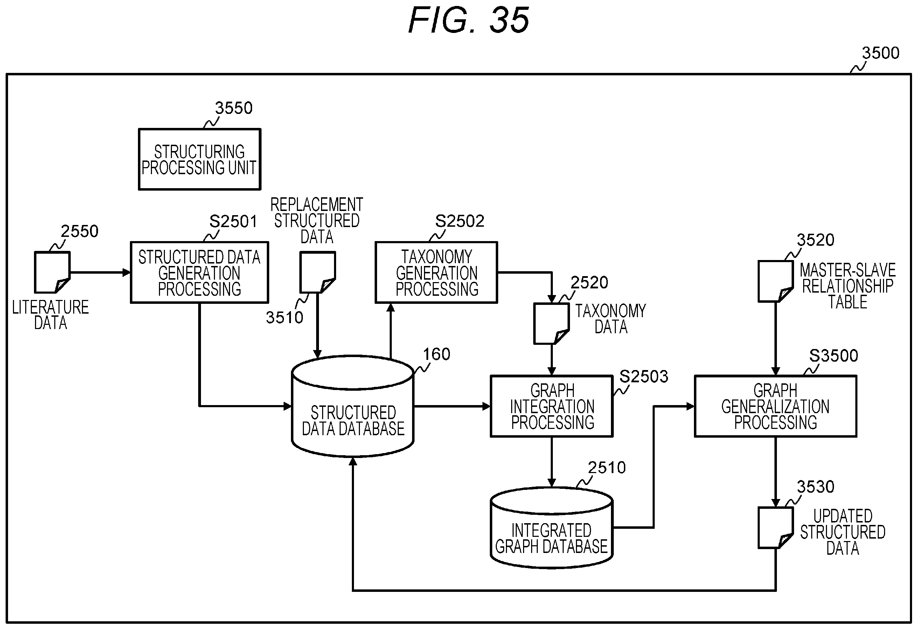

FIG. 35 is a diagram illustrating an overall flow according to the third embodiment.

A structuring processing unit 3550 in a structuring processing apparatus 3500 according to the third embodiment performs graph generalization processing (step S3500) illustrated in FIG. 35 instead of the graph generalization processing (step S2504) and the graph update processing (step S2505) illustrated in FIG. 25. As structured data according to the second embodiment, replacement structured data 3510 is stored in the structured data database 160. Using the generated integrated graph data and a master-slave relationship table 3520, the structuring processing unit 2550 specifies information omitted in Example Y in the literature and complement contents thereof, and updates the structured data. As a result, updated structured data 3530 is generated. The structuring processing unit 3550 stores the updated structured data 3530 in the structured data database 160. The master-slave relationship table 3520 may be stored in the storage device of the computer 200.

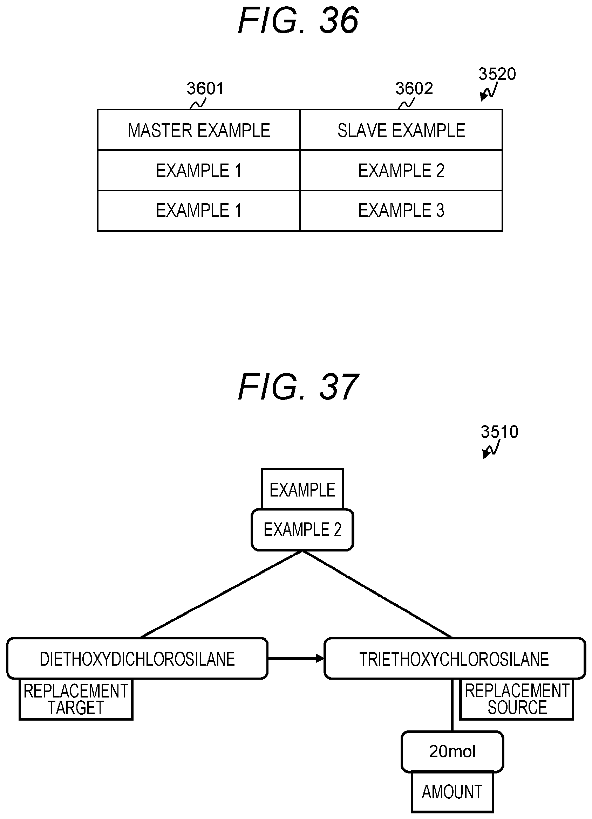

FIG. 36 is a diagram illustrating an example of the master-slave relationship table 3520 according to the third embodiment.

The master-slave relationship table 3520 stores entries each including a master example 3601 and a slave example 3602. One entry exists for one pair of literature examples. Note that the fields included in the entry are merely examples, and the present invention is not limited thereto.

The master example 3601 is a field for storing information indicating Example X, which is a mater example. The slave example 3602 is a field for storing information indicating Example Y, which is a slave example. For example, the first entry indicates that Literature Example 2 is dependent on Literature Example 1. The master-slave relationship between literature examples may have a tree structure.

FIG. 37 is a diagram illustrating an example of the replacement structured data 3510 according to the third embodiment.

The replacement structured data 3510 is graph data. The replacement structured data 3510 may be data for each slave example. In a graph represented by the replacement structured data 3510, a node corresponds to an entity in a literature, and a label taxonomy "example", "replacement target", "replacement source", or the like is assigned to the node. When there are a node taxonomic node "replacement target" and a node taxonomic node "replacement source" to which the node taxonomic node "replacement target" is directly connected, an entity represented by the node taxonomic node "replacement source" (an entity in a master example on which a slave example depends) is replaced in the slave example with an entity represented by the node taxonomic node "replacement target".

For example, according to the example of FIG. 37, "triethoxychlorosilane" in master Example 1, is replaced with "diethoxydichlorosilane" in slave Example 2. Except for this, slave Example 2 is similar to master Example 1.

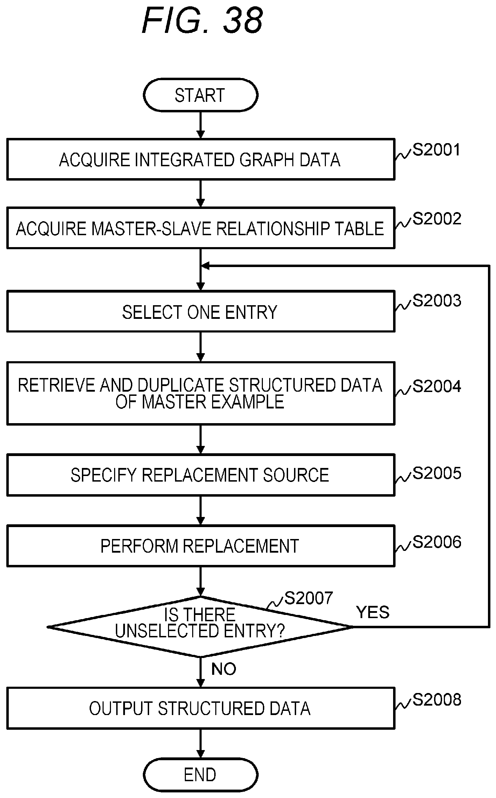

FIG. 38 is a flowchart illustrating an example of graph generalization processing (step S3500 in FIG. 35) executed by the structuring processing apparatus 3500 according to the third embodiment.

The structuring processing unit 3550 acquires the integrated graph data (step S2001) and acquires the master-slave relationship table (step S2002).

Next, the structuring processing unit 3550 selects one entry from the master-slave relationship table 3520 (step S2003). Steps S2004 to S2006 are performed for the selected entry.

That is, the structuring processing unit 3550 retrieves structured data for a master example represented by the master example 3601 of the entry from the structured data database 160, and duplicates the found structured data (step S2004). The structuring processing unit 3550 retrieves a "replacement source" node (a node to which a "replacement source" is assigned) in the replacement structured data 3510 corresponding to a slave example indicated by the slave example 3602 of the entry from the duplicated structured data (step S2005). The structuring processing unit 3550 replaces the discovered node in the duplicated structured data with the same node as the "replacement target" node (the node to which the "replacement source" is assigned) in the replacement structured data 3510 (step S2006).

Thereafter, the structuring processing unit 3550 determines whether there is an unselected entry in the master-slave relationship table 3520 (step S2007). When there is an unselected entry, the processing returns to step S2003. When there is no unselected record, the updated duplicated structured data is output (S2007).

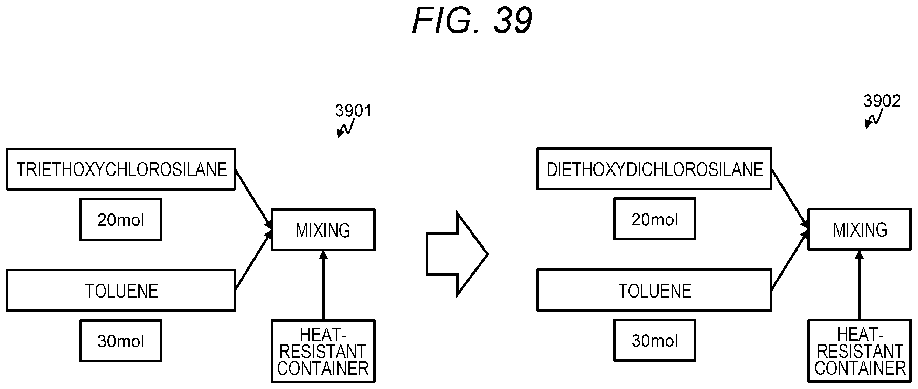

FIG. 39 is a diagram illustrating a specific example of the graph generalization processing of FIG. 38.

Structured data 3901 of master Example 1 is duplicated, and a "replacement source" node in a graph represented by the duplicated structured data is replaced with a "replacement target" node, thereby generating structured data 3902 of slave Example 2. Specifically, based on the replacement structured data 3510 exemplified in FIG. 37, a node "triethoxychlorosilane" represented by the duplicated structured data is replaced with a node "diethoxydichlorosilane", thereby generating the structured data 3902 of Example 2.

### [Fourth Embodiment]

In the present embodiment, a name matching process using the integrated graph information generated in the second embodiment and the taxonomy information will be described. In the present embodiment, differences from the second embodiment will be mainly described, and descriptions of common points with the second embodiment will be omitted or simplified.

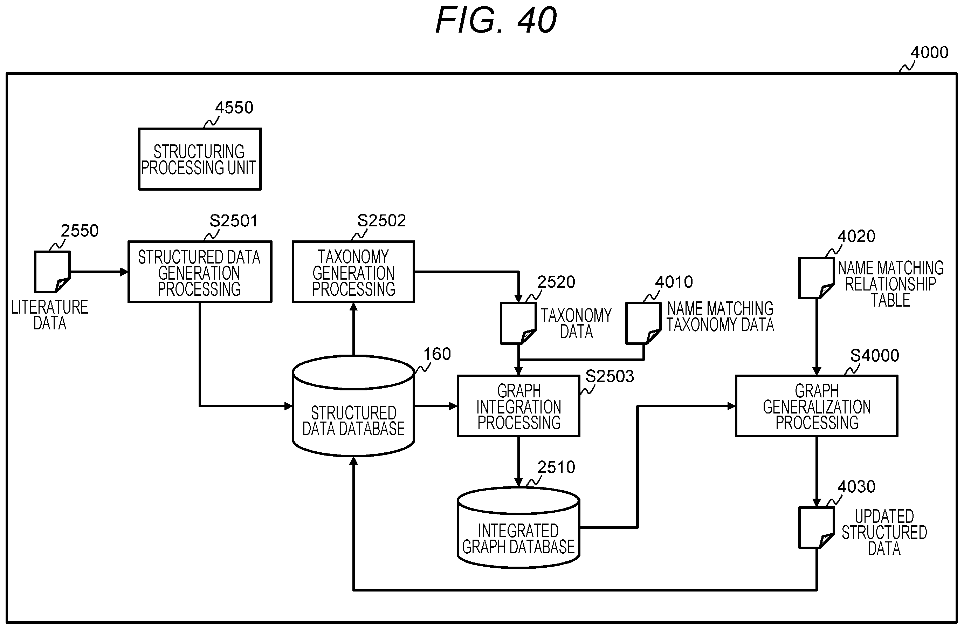

FIG. 40 is a diagram illustrating an overall flow according to the fourth embodiment.

In addition to the taxonomy data 2520, name matching taxonomy data 4010 is prepared. A structuring processing unit 4550 in a structuring processing apparatus 4500 according to the fourth embodiment performs graph generalization processing (step S4000) illustrated in FIG. 40 instead of the graph generalization processing (step S2504) and the graph update processing (step S2505) illustrated in FIG. 25. In the graph generalization processing (step S4000), the structuring processing unit 4550 updates the structured data using the generated integrated graph data and a name matching relationship table 4020. As a result, updated structured data 4030 is generated. The structuring processing unit 4550 stores the updated structured data 4030 in the structured data database 160. The name matching taxonomy data 4010 and the name matching relationship table 4020 may be stored in the storage device of the computer 200.

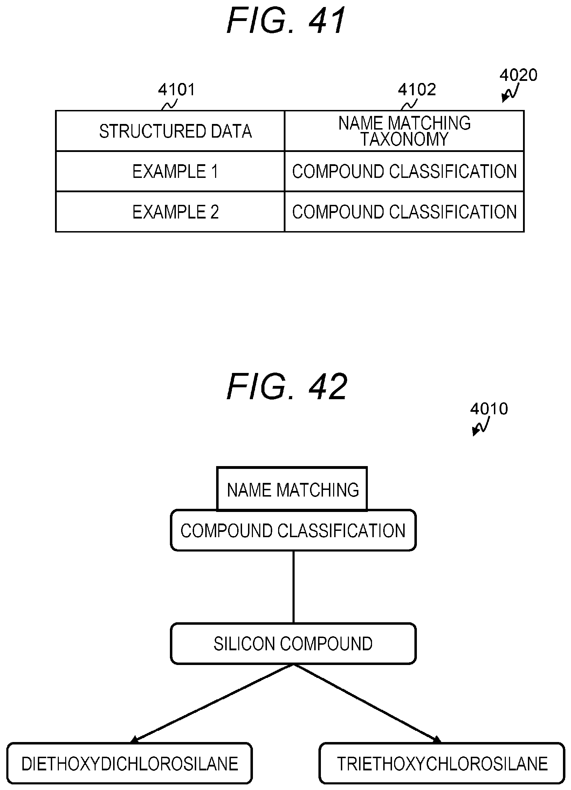

FIG. 41 is a diagram illustrating an example of the name matching relationship table 4020 according to the fourth embodiment.

The name matching relationship table 4020 stores entries each including structured data 4101 and a name matching taxonomy 4102. One entry exists for one piece of structured data. Note that the fields included in the entry are merely examples, and the present invention is not limited thereto.

The structured data 4101 is a field for storing information indicating an element (e.g., a reference example) corresponding to structured data. The name matching taxonomy 4102 is a field for storing information indicating a taxonomy after name matching. For example, the first entry indicates that the structured data of Literature Example 1 is name-matched using a name matching taxonomy "compound classification".

FIG. 42 is a diagram illustrating an example of the name matching taxonomy data 4010 according to the fourth embodiment.

The name matching taxonomy data 4010 is graph data. The name matching taxonomy data 4010 may exist for each name matching taxonomy. The head node of the graph may be a taxonomy node after the name matching, and a child node of the head node may be a node representing an entity before the name matching. For example, the example of FIG. 42 is name matching taxonomy data for "compound classification", indicating that "silicon compounds" includes "diethoxydichlorosilane" and "triethoxychlorosilane".

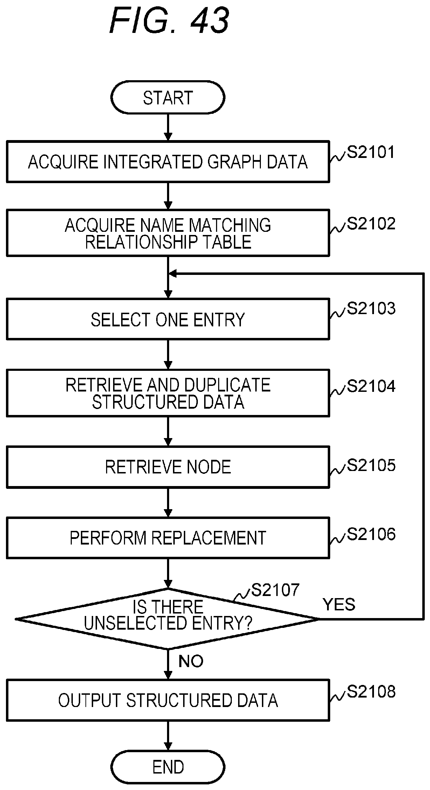

FIG. 43 is a flowchart illustrating an example of the graph generalization processing executed by the structuring processing apparatus 4500 according to the fourth embodiment.

The structuring processing unit 4550 acquires the integrated graph data (step S2101) and acquires the name matching relationship table 4020 (step S2102).

Next, the structuring processing unit 4550 selects one entry from the name matching relationship table 4020 (step S2103). Steps S2104 to S2106 are performed for the selected entry.

That is, the structuring processing unit 4550 retrieves structured data corresponding to the structured data 4101 of the entry from the structured data database 160, and duplicates the found structured data (step S2104). The structuring processing unit 4550 specifies name matching taxonomy data 4010 corresponding to the name matching taxonomy 4102 of the entry, and retrieves a node matching a child node (a node representing an entity to be subjected to name matching) represented by the specified name matching taxonomy data 4010 from the duplicated structured data (step S2105). The structuring processing unit 4550 replaces the discovered node with a parent node (a node representing a taxonomy after name matching) represented by the name matching taxonomy data 4010 (step S2106).

Thereafter, the structuring processing unit 4550 determines whether there is an unselected entry in the name matching relationship table 4020 (step S2107). When there is an unselected entry, the processing returns to S2103. When there is no unselected record, the structuring processing unit 4550 outputs the updated duplicated structured data (step S2108).

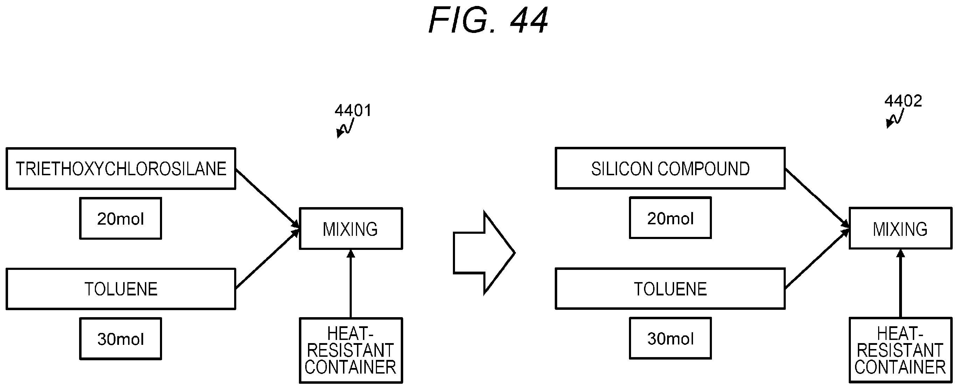

FIG. 44 is a diagram illustrating a specific example of the graph generalization processing of FIG. 43.

The structured data 4401 according to the first embodiment is duplicated, and an entity node (a node representing an entity to be subjected to name matching) in a graph represented by the duplicated structured data is replaced with a name matching taxonomic node (a taxonomic node after the name matching), thereby generating structured data 4402. Specifically, based on the name matching taxonomy data 4010 exemplified in FIG. 442, a node "triethoxychlorosilane" represented by the duplicated structured data is replaced with a node "silicon compound", thereby obtaining the structured data 4402.

It should be noted that the present invention is not limited to the above-described embodiments, and includes various modifications. In addition, for example, the configurations of the above-described embodiments have been described in detail in order to explain the present invention in an easy-to-understand manner, and the present invention is not necessarily limited to having all the configurations described above. In addition, other configurations may be added to some of the configurations of each embodiment, some of the configurations of each embodiment may be deleted, or some of the configurations of each embodiment may be replaced with other configurations.

Further, some or all of the above-described configurations, functions, processing units, processing means, and the like may be realized by hardware, for example, by designing an integrated circuit. In addition, the present invention can also be realized by a program code of software that realizes the functions of the embodiments. In this case, a storage medium in which the program code is recorded is provided in a computer, and a processor included in the computer reads the program code stored in the storage medium. In this case, the program code itself read from the storage medium realizes the functions of the above-described embodiments, and the program code itself and the storage medium storing the program code constitute the present invention. As a storage medium for supplying such a program code, for example, a flexible disk, a CD-ROM, a DVD-ROM, a hard disk, a solid state drive (SSD), an optical disk, a magneto-optical disk, a CD-R, a magnetic tape, a non-volatile memory card, a ROM, or the like is used.

In addition, the program code realizing the functions described in the present embodiments can be implemented by a wide range of programs or script languages, for example, assembler, C/C++, perl, Shell, PHP, Python, and Java (registered trademark).

Furthermore, by distributing the program code of software that realizes the functions of the embodiments via a network, the program code may be stored in a storage means such as a hard disk or a memory of the computer or in a storage medium such as a CD-RW or a CD-R, and the processor included in the computer may read and execute the program code stored in the storage means or the storage medium.

In addition, in the above-described embodiments, the control lines and information lines are those that are considered necessary for the description, and all the control lines and information lines on the product are not necessarily shown. All the configurations may be connected to each other.

The above description can be summarized, for example, as follows. The following summary may include supplementary description of the above description and description of modifications.

A data processing apparatus (e.g., a structuring processing apparatus) includes a storage device (e.g., the main storage device 202 and the auxiliary storage device 203) in which structured data on a document describing a plurality of procedures is stored, and an arithmetic device (e.g., the arithmetic device 201) that performs structuring update processing that is processing of generating updated structured data. The arithmetic device is connected to the storage device.

The structured data is graph data representing a graph including a plurality of entity nodes and one or more edges. Each of the plurality of entity nodes is a node expressing an entity in the document. The structuring update processing includes updating a structured graph that is a graph represented by the structured data or a duplicate thereof, based on update definition data and a taxonomy of at least one entity node in the structured graph, the update definition data being data defining update of at least one of a node and an edge in an expression using the taxonomy. The updated structured data is data representing a graph after the structured graph is updated.

This makes it possible to generate highly accurate structured data on a document describing a plurality of procedures. For example, by using the structured data or the update definition data as data for a plurality of documents, it is expected that a graph for a certain document will be complemented with a graph for another document. In addition, a large amount of training data is not necessary in generating updated structured data with high accuracy. In addition, since the updated structured data is generated based on the update definition data defining the update of at least one of the node and the edge in the expression using the taxonomy, it is not necessary to prepare language-dependent rules, and it is expected that accurate structured data will be generated even if the descriptions of consecutive procedures are scattered in the document.

Note that the structured data on the document may be data on one document, data on one document portion, or data on one document set (a plurality of documents). That is, it is not necessary that the unit in which the structured data is prepared is limited to a document. In addition, the format for expressing a plurality of procedures in a document, another format may be adopted instead of or in addition to the text format.

Furthermore, the updated structured data may be used as training data for machine learning. The graph represented by the updated structured data may include a plurality of nodes and a plurality of edges representing a plurality of procedures and results of the plurality of procedures, and such updated structured data may be used as train data. Since the accuracy of the updated structured data is high, it is expected that the accuracy of machine learning (the accuracy in training a machine learning model) will be improved. The updated structured data modified by the user may also be used as train data. That is, the user may present "process", rather than presenting "condition" for the graph pattern, so that the pattern of the "condition" common to the "process" presented may be learned.

Further, an example of each of the plurality of procedures may be the "process" in the above-described embodiment. That is, the plurality of procedures may be a plurality of processes, and the plurality of processes may constitute a "business process". The "business" may include recommending device operating procedures and recommending a process against a failure of a device in the industrial field; diagnosis, treatment, and medication in the medical field; and recommending a new material synthesis process in the materials field.

The taxonomy may be either an entity taxonomy (e.g., a label taxonomy or a word taxonomy) that is a taxonomy of an entity or a relationship taxonomy that is a taxonomy of the entity taxonomy. The update definition data may include graph pattern data (e.g., the graph pattern database 2540) representing one or more graph patterns. Each of the one or more graph patterns may include a pattern condition (e.g., a "condition" for the graph pattern) that is a graph structure corresponding to the graph pattern or a summary of the graph structure, and a complementing process (e.g., a "process" for the graph pattern) for the graph structure. The summary of the graph structure may be, for example, a feature vector of the graph structure or another type of feature.

The structuring update processing may include graph generalization processing (e.g., step S2504) and graph update processing (e.g., step S2505).

The graph generalization processing may include converting the graph represented by the structured data into a generalized graph including a plurality of generalization nodes and one or more edges. Each of the plurality of generalization nodes may be a node expressing an entity taxonomy or a relationship taxonomy of an entity expressed by an entity node, or a duplicate of the entity node.

The graph update processing may include updating the generalized graph by performing a complementing process on the generalized graph in a graph pattern including a pattern condition suitable for the generalized graph, and generating updated structured data by changing a graph structure of the structured graph (some or all of the structure of the structured graph) to a graph structure of the updated generalized graph. For example, a connection relationship between entity nodes in the graph structure of the structured graph may be a connection relationship between generalized graph nodes corresponding to the entity nodes.

The graph pattern data is data used for updating the generalized graph. Therefore, it is expected that the configuration of the graph pattern data will be simpler than that of graph pattern data (or data similar thereto) for updating a structured graph without a generalized graph. In addition, for this reason, it is expected that updated structured data will be generated with high accuracy.

The structuring update processing may include graph integration processing (e.g., step S2503) of generating an integrated graph in which one or more taxonomic nodes are associated with the structured graph. For each of the plurality of entity nodes represented by the structured graph, when there is one or more taxonomies for an entity expressed by the entity node, the one or more taxonomic nodes may be associated in the integrated graph. Each of the taxonomic nodes may be a node (e.g., a node taxonomic node or a relationship taxonomic node) expressing a taxonomy. The arithmetic device may perform the graph generalization processing after the graph integration processing. For each entity node, a generalization node in the generalized graph may correspond to a taxonomic node associated with the entity node in the integrated graph. As a result, it is expected that a generalized graph will be efficiently generated. For example, for an entity with which an entity taxonomy and a relationship taxonomy are associated, in the integrated graph, a child node of an entity node of the entity may be a taxonomic node of the entity taxonomy, and a child node of the taxonomic node may be a taxonomic node of the relationship taxonomy of the entity. A graph structure of the generalized graph may be based on a graph structure of the integrated graph.

There may be a plurality of types of taxonomies for at least one of an entity taxonomy and a relationship taxonomy. For example, for an entity taxonomy, there may be taxonomies "substance name", "state", "operation", and the like. For a relationship taxonomy, there may be taxonomies "master", "slave", "differentiation", "integration", and the like. A type of taxonomy to be used may be defined for each of a plurality of types of complementing processes related to the generalized graph. For example, data representing such a definition (e.g., the processing list data 2800) may be prepared. The graph generalization processing may include, for each of the plurality of types of complementing processes, converting the structured graph into a generalized graph including a generalization node expressing a taxonomy belonging to a type corresponding to the complementing process. As a result, an appropriate generalized graph corresponding to the graph structure of the structured graph is prepared for each complementing process, and thus, it is expected that updated structured data will be generated with high accuracy. Note that, for each of the plurality of graph patterns, the graph pattern may include any type of complementing process among the plurality of types of complementing processes, and the plurality of types of complementing processes may include two or more types of the following complementing processes.
· A split process of splitting the generalized graph.
· A duplication process of adopting a duplicate of a generalization node corresponding to a previous procedure of a certain procedure as a parent node or a child node of the generalization node corresponding to the certain procedure. (The "generalization node corresponding to the certain procedure" may be, for example, any one of the two "substance name" nodes corresponding to the missing process exemplified in FIG. 34B or a "measurement" node corresponding to the missing process exemplified in FIG. 34C.)
· An addition process of adding a new generalization node as a parent node or a child node of the generalization node. (The "new generalization node" may be, for example, an "addition" node exemplified in FIG. 34D.)
An integration process of integrating different generalization nodes or their child generalization nodes with which the same classification meta taxonomy is associated. (The "same classification meta taxonomy" may be, for example, "differentiation" exemplified in FIG. 34F or "integration" exemplified in FIG. 34G. The "integration of different generalization nodes" may be, for example, integrating (merging) a "substance name" node (a parent node is an "operation" node) exemplified in the upper half of FIG. 34G and a "substance name" node (a child node is an "operation node") exemplified in the upper half of FIG. 34G. The "integration of child nodes of the different generalization nodes" may be, for example, adding a child node (a "silicon gel" node) of a "substance name" node to a child node of another "substance name" node (there is no "silicon gel" node as a child node) in FIG. 34F.)
· A link replacement process of setting a generalization node to or from which an edge is connected as another generalization node

The pattern condition suitable for the generalized graph may be a condition in which a similarity between the generalized graph and the pattern condition is equal to or greater than a similarity threshold. As a result, it is expected that an appropriate graph pattern of the graph structure of the generalized graph will be selected.

The update definition data may include master-slave relationship data (e.g., the master-slave relationship table 3520) representing master-slave relationships between document portions or documents, and update method data (e.g., the replacement structured data 3510) representing a graph update method according to a difference between a master document portion or document and a slave document portion or document for the slave document portion or document. An example of the "graph update method" mentioned here is replacement (replacing a node of an entity (or a taxonomy) of a replacement source with a node of an entity (or a taxonomy) of a replacement target) in the third embodiment, but may be adding an entity (or a taxonomy) or deleting an entity (or a taxonomy) instead of or in addition to the replacement. When the structured data corresponds to the master document portion or document, the structuring update processing may include specifying the slave document portion or document corresponding to the master document portion or document from the master-slave relationship data, and generating the updated structured data by updating a structured graph represented by a duplicate of the structured data according to the graph update method represented by the update method data. As a result, it is expected that updated structured data will be generated with high accuracy for the slave document portion or document based on the structured data of the master document portion or document.

The update definition data may include name matching definition data (e.g., the name matching taxonomy data 4010 and the name matching relationship table 4020) indicating an entity before name matching and a taxonomy after the name matching for each name matching type. The structuring update processing may include generating the updated structured data by updating an entity node corresponding to the entity before the name matching to a node expressing the taxonomy after the name matching in a structured graph represented by a duplicate of the structured data. As a result, it is expected that updated structured data will be generated with high accuracy.

The structured data may be data prepared by any method. In the structured data, data on properties of elements such as entity nodes and edges may include data representing entities, taxonomies, and the like.

The structured data may be generated as follows. That is, the arithmetic device may extract expressions related to a plurality of procedures from a document as entities. The arithmetic device may classify categories of the entities. The arithmetic device may generate a plurality of entity groups each including one or more entities and corresponding to one procedure. For each entity group, the arithmetic device may specify a main entity that is an entity characterizing the procedure corresponding to the entity group based on the category of the one or more entities included in the entity group. The arithmetic device may execute first order determination processing of determining an order between the plurality of procedures based on a relationship between the main entities. The arithmetic device may decide an order between the plurality of procedures based on a result of the first order determination processing. The arithmetic device may generate information about the ordered entity groups as structured data, and output the structured data.

The arithmetic device may execute parallelism determination processing of specifying procedures to be executed in parallel based on the relationship between the main entities, and decide an order between the plurality of procedures based on the result of the first order determination processing and a result of the parallelism determination processing. In the first order determination processing, an order between two procedures may be determined based on at least one of a character string included in a sentence connecting main entities to each other and a similarity between the main entities. In the parallelism determination processing, procedures to be executed in parallel may be specified based on a character string included in a sentence connecting main entities to each other. Information for managing rules for determining the order between the two procedures based on at least one of the character string included in the sentence connecting entities to each other and the similarity between the entities, and information for managing rules for determining whether procedures are executed in parallel based on the character string included in the sentence connecting main entities to each other may be held in the data processing apparatus.

For each entity group, the arithmetic device may classify the category of the procedure corresponding to the entity group based on the category of the one or more entities included in the entity group. The arithmetic device may execute second order determination processing of determining an order between the plurality of procedures based on the relationship between the order between the procedures and the categories of the procedures. The arithmetic device may decide the order between the plurality of procedures based on the first order determination processing and the second order determination processing. Information for managing rules defining an order in which the categories of the procedures in the business process appear may be held in the data processing apparatus.

### Reference Signs List

100, 2500, 3500, 4000 structuring processing apparatus

## Claims

1. A data processing apparatus comprising:
a storage device in which structured data on a document describing a plurality of procedures is stored; and
an arithmetic device that performs structuring update processing that is processing of generating updated structured data, the arithmetic device being connected to the storage device,
wherein
the structured data is graph data representing a graph including a plurality of entity nodes and one or more edges,
each of the plurality of entity nodes is a node expressing an entity in the document,
the structuring update processing includes updating a structured graph that is a graph represented by the structured data or a duplicate thereof, based on update definition data and a taxonomy of at least one entity node in the structured graph, the update definition data being data defining update of at least one of a node and an edge in an expression using the taxonomy, and
the updated structured data is data representing a graph after the structured graph is updated.

2. The data processing apparatus according to claim 1, wherein
the taxonomy is either an entity taxonomy that is a taxonomy of an entity or a relationship taxonomy that is a taxonomy of the entity taxonomy,
the update definition data includes graph pattern data representing one or more graph patterns,
each of the one or more graph patterns includes a pattern condition that is a graph structure corresponding to the graph pattern or a summary of the graph structure, and a complementing process for the graph structure,
the structuring update processing includes graph generalization processing and graph update processing,
the graph generalization processing includes converting the graph represented by the structured data into a generalized graph including a plurality of generalization nodes and one or more edges,
each of the plurality of generalization nodes is a node expressing an entity taxonomy or a relationship taxonomy of an entity expressed by an entity node, or a duplicate of the entity node, and
the graph update processing includes:
updating the generalized graph by performing a complementing process on the generalized graph in a graph pattern including a pattern condition suitable for the generalized graph; and
generating updated structured data by changing a graph structure of the structured graph to a graph structure of the updated generalized graph.

3. The data processing apparatus according to claim 2, wherein
the structuring update processing includes graph integration processing of generating an integrated graph in which one or more taxonomic nodes are associated with the structured graph,
for each of the plurality of entity nodes represented by the structured graph, when there is one or more taxonomies for an entity expressed by the entity node, the one or more taxonomic nodes are associated in the integrated graph,
each of the taxonomic nodes is a node expressing a taxonomy,
the arithmetic device performs the graph generalization processing after the graph integration processing, and
for each entity node, a generalization node in the generalized graph corresponds to a taxonomic node associated with the entity node in the integrated graph.

4. The data processing apparatus according to claim 3, wherein
for an entity with which an entity taxonomy and a relationship taxonomy are associated, in the integrated graph,
a child node of an entity node of the entity is a taxonomic node of the entity taxonomy, and
a child node of the taxonomic node is a taxonomic node of the relationship taxonomy of the entity, and
a graph structure of the generalized graph is based on a graph structure of the integrated graph.

5. The data processing apparatus according to claim 2, wherein
there are a plurality of types of taxonomies for at least one of an entity taxonomy and a relationship taxonomy,
a type of taxonomy to be used is defined for each of a plurality of types of complementing processes related to the generalized graph, and
the graph generalization processing includes, for each of the plurality of types of complementing processes, converting the structured graph into a generalized graph including a generalization node expressing a taxonomy belonging to a type corresponding to the complementing process.

6. The data processing apparatus according to claim 5, wherein
for each of the plurality of graph patterns, the graph pattern includes any type of complementing process among the plurality of types of complementing processes, and
the plurality of types of complementing processes include two or more types of the following complementing processes:
· a split process of splitting the generalized graph;
· a duplication process of adopting a duplicate of a generalization node corresponding to a previous procedure of a certain procedure as a parent node or a child node of the generalization node corresponding to the certain procedure;
· an addition process of adding a new generalization node as a parent node or a child node of the generalization node;
an integration process of integrating different generalization nodes or child generalization nodes of the different generalization nodes with which the same classification meta taxonomy is associated; and
· a link replacement process of setting a generalization node to or from which an edge is connected as another generalization node.

7. The data processing apparatus according to claim 2, wherein the pattern condition suitable for the generalized graph is a condition in which a similarity between the generalized graph and the pattern condition is equal to or greater than a similarity threshold.

8. The data processing apparatus according to claim 1, wherein
the update definition data includes master-slave relationship data representing master-slave relationships between document portions or documents, and update method data representing a graph update method according to a difference between a master document portion or document and a slave document portion or document for the slave document portion or document, and
when the structured data corresponds to the master document portion or document, the structuring update processing includes:
specifying the slave document portion or document corresponding to the master document portion or document from the master-slave relationship data; and
generating the updated structured data by updating a structured graph represented by a duplicate of the structured data according to the graph update method represented by the update method data.

9. The data processing apparatus according to claim 1, wherein
the update definition data includes name matching definition data indicating an entity before name matching and a taxonomy after the name matching for each name matching type, and
the structuring update processing includes generating the updated structured data by updating an entity node corresponding to the entity before the name matching to a node expressing the taxonomy after the name matching in a structured graph represented by a duplicate of the structured data.

10. The data processing apparatus according to claim 1, wherein
the arithmetic device is configured to:
extract expressions related to the plurality of procedures from the document as entities;
classify categories of the entities;
generate a plurality of entity groups each including one or more of the entities and corresponding to one of the procedures;
for each of the entity groups, specify a main entity that is an entity characterizing the procedure corresponding to the entity group based on a category of the one or more entities included in the entity group;
execute first order determination processing of determining an order between the plurality of procedures based on a relationship between the main entities;
decide the order between the plurality of procedures based on a result of the first order determination processing; and
generate information about the ordered entity groups as structured data.

11. A data processing method comprising performing, by a computer, structuring update processing that is processing of generating updated structured data with respect to structured data on a document describing a plurality of procedures,
wherein
the structured data is graph data representing a graph including a plurality of entity nodes and one or more edges,
each of the plurality of entity nodes is a node expressing an entity in the document,
the structuring update processing includes updating a structured graph that is a graph represented by the structured data or a duplicate thereof, based on update definition data and a taxonomy of at least one entity node in the structured graph, the update definition data being data defining update of at least one of a node and an edge in an expression using the taxonomy,
the taxonomy is either an entity taxonomy that is a taxonomy of an entity or a relationship taxonomy that is a taxonomy of the entity taxonomy, and
the updated structured data is data representing a graph after the structured graph is updated.

12. A computer program for causing a computer to execute structuring update processing that is processing of generating updated structured data with respect to structured data on a document describing a plurality of procedures,
wherein
the structured data is graph data representing a graph including a plurality of entity nodes and one or more edges,
each of the plurality of entity nodes is a node expressing an entity in the document,
the structuring update processing includes updating a structured graph that is a graph represented by the structured data or a duplicate thereof, based on update definition data and a taxonomy of at least one entity node in the structured graph, the update definition data being data defining update of at least one of a node and an edge in an expression using the taxonomy,
the taxonomy is either an entity taxonomy that is a taxonomy of an entity or a relationship taxonomy that is a taxonomy of the entity taxonomy, and
the updated structured data is data representing a graph after the structured graph is updated.
